Europäisches Patentamt

European Patent Office

Office européen des brevets

(19)

(11) **EP 0 845 083 B1**

(12) **EUROPÄISCHE PATENTSCHRIFT**

(45) Veröffentlichungstag und Bekanntmachung des Hinweises auf die Patenterteilung:
**18.02.2004   Patentblatt 2004/08**

(51) Int Cl.[7]: **F16C 39/06**

(21) Anmeldenummer: **96926308.6**

(86) Internationale Anmeldenummer:
**PCT/CH1996/000286**

(22) Anmeldetag: **19.08.1996**

(87) Internationale Veröffentlichungsnummer:
**WO 1997/007340 (27.02.1997 Gazette 1997/10)**

(54) **MAGNETISCHE LAGERVORRICHTUNG UND VERFAHREN ZUM BETRIEB DERSELBEN**

MAGNETIC BEARING AND PROCESS FOR OPERATING IT

PALIER MAGNETIQUE ET SON PROCEDE DE FONCTIONNEMENT

(84) Benannte Vertragsstaaten:
**CH DE FR GB LI**

(30) Priorität: **18.08.1995  CH 236795
30.07.1996  EP 96810507**

(43) Veröffentlichungstag der Anmeldung:
**03.06.1998   Patentblatt 1998/23**

(73) Patentinhaber: **Lust Antriebstechnik GmbH
35633 Lahnau (DE)**

(72) Erfinder: **SCHÖB, Reto
CH-8604 Volketswil (CH)**

(74) Vertreter: **Sulzer Management AG
KS/Patente/0007
Zürcherstrasse 12
8401 Winterthur (CH)**

(56) Entgegenhaltungen:
**EP-A- 0 191 225          EP-A- 0 612 928
WO-A-90/14525          WO-A-95/05700
DE-A- 2 358 527          DE-A- 2 406 790
US-A- 4 732 353          US-A- 5 179 308**

 • **J. Bichsel, "Der Lagerlose Elektromotor",
Technische Rundschau, Nr. 35, 3 September
1993, Bern, CH, Seiten 60 - 66**

**Beschreibung**

Die Erfindung betrifft eine magnetische Lagervorrichtung gemäss dem Oberbegriff von Anspruch 1.

Aus der EP 0 612 928 ist bekannt, zur berührungsfreien Lagerung von Rotoren aktive Magnetlager einzusetzen. Das Prinzip der aktiven magnetischen Lagerung basiert auf der anziehenden Kraft von regelbaren Elektromagneten auf einen ferromagnetischen Rotor. Um die Lage des Rotors in radialer Richtung zu bestimmen sind drei u-förmige Elektromagnete über den Umfang des Rotors verteilt angeordnet. Diese drei Magnetpaare bilden ein sogenanntes Radiallager. Ähnlich einem Kugellager kann das Radiallager den Rotor an einer Stelle in einer Ebene (xy-Richtung) festhalten. Da oft auch ein Kippen des Rotors zu verhindern ist, wird dieser vorzugsweise durch zwei an unterschiedlichen Stellen angeordneten Radiallagern gehalten.

Diese bekannte magnetische Lagervorrichtung weist den Nachteil auf, dass die Elektromagnete u-förmig ausgestaltet sind. Daher weist diese Lagervorrichtung über deren Umfang eine grössere Anzahl von Polwechsel auf, was erhöhte Wirbelstromverluste bewirkt. Ein weiterer Nachteil der bekannten Lagervorrichtung ist darin zu sehen, dass die Elektromagnete speziell gefertigt und entsprechend teuer sind, und dass für jedes u-förmig ausgestaltete Elektromagnet ein gesonderter, spezieller Leistungsverstärker notwendig ist, sodass zum Betrieb eines Radialmagnetlagers insgesamt drei separate Gleichstromsteller erforderlich sind.

Aus dem Artikel "Der lagerlose Elektromotor" von Jürg Bichsel, Technische Rundschau No. 35 (September 1993), ist es bekannt, bei Lorentz-Lagern, das sind Magnetlager, bei denen die Lagerung mit Hilfe von Lorentz-Kräften bewirkt wird, dreiphasige Drehstromsteller zu verwenden.

Aus der WO-A-90/14525 ist ein Maxwell-Lager bekannt, bei welchem der Stator zwei Statorringe umfasst, zwischen denen ein Magnet zur Erzeugung einer Vormagnetisierung angeordnet ist. Dieser Magnet kann entweder ein Permanentmagnet oder ein Elektromagnet sein. Der von diesem Magneten erzeugte Vormagnetisierungsfluss wird in axialer Richtung über ein Polstück zu dem einen Statorring geführt, tritt dort über den Luftspalt zwischen Statorring und Rotor in radialer Richtung in den Rotor ein, und wird in axialer Richtung längs des Rotors zu dem anderen Statorring geführt, wo der Vormagnetisierungsfluss über den Luftspalt zwischen Rotor und Statorring in radialer Richtung in den anderen Statorring eintritt. Von diesem Statorring wird der Vormagnetisierungsfluss über ein weiteres Polstück in axialer Richtung zu dem Magneten zurückgeführt, wodurch der magnetische Kreis geschlossen ist. In beiden Statorringen sind jeweils Wicklungen zur Erzeugung eines Steuerflusses angeordnet, mit welchem die radiale Position des Rotors steuerbar ist.

Es ist Aufgabe der vorliegenden Erfindung eine wirtschaftlich vorteilhafte magnetische Maxwell-Lagervorrichtung vorzuschlagen.

Diese Aufgabe wird gelöst mit einer magnetischen Maxwell-Lagervorrichtung gemäss den Merkmalen von Anspruch 1. Die Unteransprüche 2 bis 18 beziehen sich auf weitere, vorteilhafte Ausgestaltungen der erfindungsgemässen Maxwell-Lagervorrichtung. Anspruch 19 betrifft eine Vorrichtung, welche eine erfindungsgemässe Maxwell-Lagervorrichtung umfasst.

Die Aufgabe wird insbesondere gelöst durch eine magnetische Maxwell-Lagervorrichtung für einen magnetisierbaren Körper, insbesondere eine rotierbare Welle, welche Maxwell-Lagervorrichtung mindestens einen als Drehfeldmaschinenstator ausgebildeten Stator umfasst mit Drehfeldwicklungen zur Erzeugung des Steuerflusses, die als zweipolige, mindestens zweiphasige Drehfeldwicklungen ausgebildet sind.

In einer vorteilhaften Ausgestaltung der Erfindung sind mindestens zwei Drehfeldmaschinenstatoren vorgesehen mit je einer zweipoligen, mindestens zweiphasigen Drehfeldwicklung.

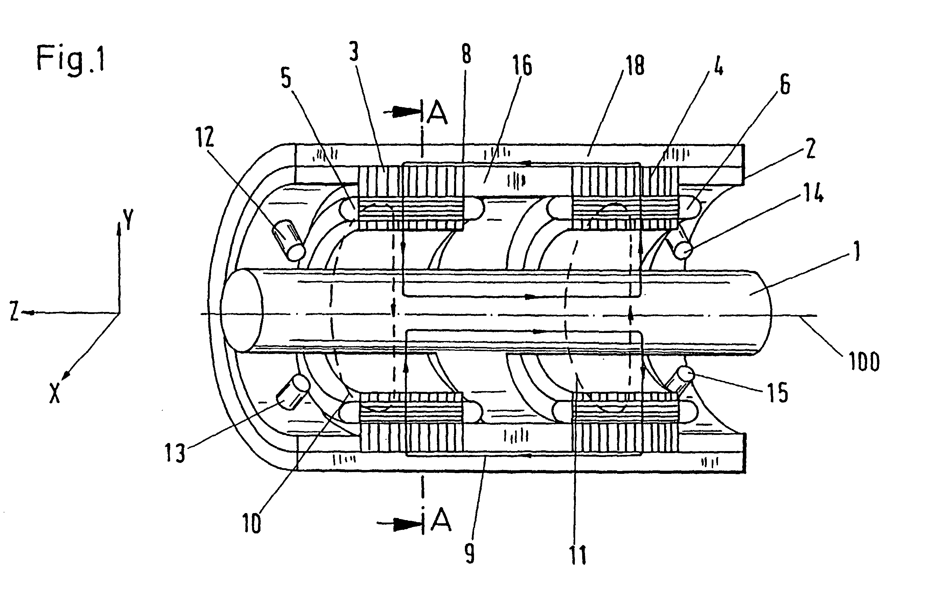

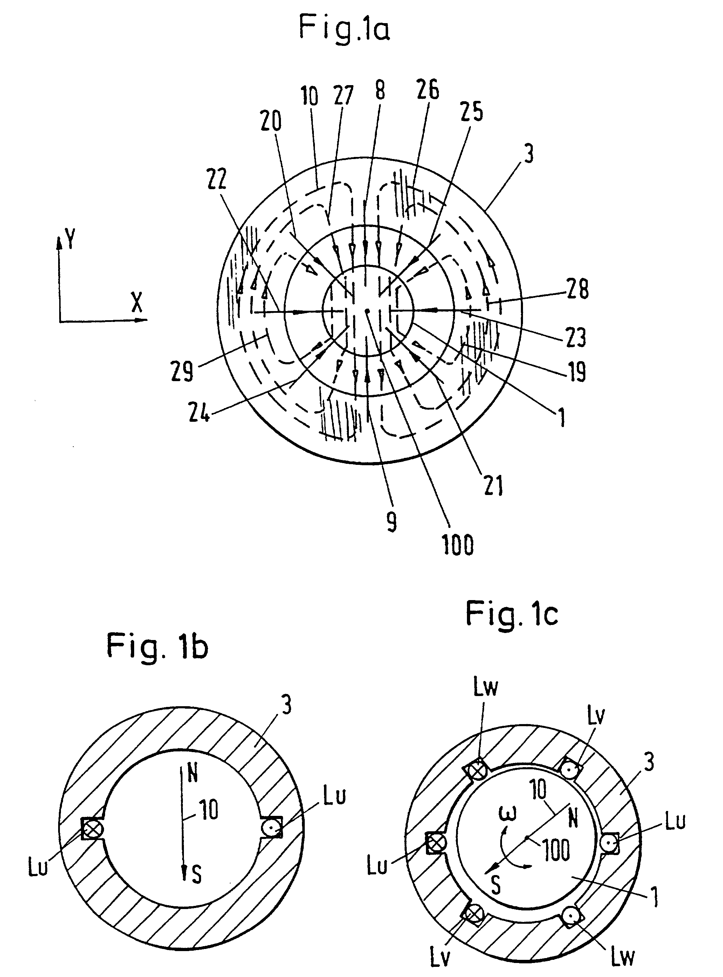

In den vorliegenden Ausführungen wird unter dem Begriff Drehfeldmaschinenstator eine aus dem technischen Gebiet der elektrischen Maschinen bekannte Anordnung verstanden, nämlich ein Stator mit elektrischen Wicklungen zur Erzeugung eines magnetisches Feldes, wobei durch die Anzahl und die Lage der Wicklungen im Stator bei entsprechender Ansteuerung ein magnetisches Drehfeld erzeugbar ist. Unter einem zweipoligen Feld wird, wie in Fig. 1b dargestellt, ein in radialer Richtung innerhalb des Drehfeldmaschinenstator verlaufendes, zweipoliges magnetisches Feld verstanden. Unter einer zweipoligen Drehfeldwicklung wird eine Wicklung verstanden, die derart ausgestaltet und im Drehfeldmaschinenstator angeordnet und derart ansteuerbar ist, dass im Drehfeldmaschinenstator ein zweipoliges, sich drehendes magnetisches Feld erzeugbar ist. Zur Erzeugung eines Drehfeldes in einem Drehfeldmaschinenstator bedarf es Wicklungen mit zumindest zwei unterschiedlichen Phasen, d.h. unterschiedlicher Ansteuerung. In einer bevorzugten Ausführungsform ist die Drehfeldwicklung des Drehfeldmaschinenstators dreiphasig ausgeführt, d.h. mit drei Stromzweigen. In einem Drehfeldmaschinenstator ist ein zweipoliges, sich drehendes Magnetfeld erzeugbar, wobei die Drehfrequenz auch Null sein kann, sodass das zweipolige Magnetfeld stillsteht. Die Ausrichtung dieses in radialer Richtung im Drehfeldmaschinenstator verlaufenden, zweipoligen stillstehenden Magnetfeld ist durch eine entsprechende Ansteuerung der dreiphasigen Drehfeldwicklung in Umfangsrichtung des Drehfeldmaschinenstators für einen beliebigen Winkel vorgebbar. In den vorliegenden Ausführungen wird unter einem Drehfeldmaschinenstator generell eine Anordnung verstanden zur Erzeugung eines zweipoligen magnetischen Drehfeldes, wobei ein derartiger Drehfeldmaschinenstator in einer Vielzahl möglicher Ausführungsformen ausgestaltbar ist.

Ein Vorteil der vorliegenden Erfindung ist darin zu sehen, dass als Drehfeldmaschinenstator auch ein handelsüblicher, für eine elektrische Maschine gefertigter Drehfeldmaschinenstator, verwendbar ist zur Herstellung der erfindungsgemässen magnetischen Lagervorrichtung. Eine derartige magnetische Lagervorrichtung ist sehr kostengünstig herstellbar.

Ein weiterer Vorteil der erfindungsgemässen magnetischen Lagervorrichtung ist darin zu sehen, dass zur Ansteuerung der Drehstromwicklung eines Drehfeldmaschinenstators ein handelsüblicher, billig käuflicher Umrichter genügt, um die Drehstromwicklungen mit einem Strom beliebig wählbarer Amplitude und Frequenz zu versorgen. Insbesondere ist als Drehstromsteller ein konventioneller, dreiphasiger Drehstromsteller bzw. ein dreiphasiger Umrichter verwendbar. Bei diesen Drehstromstellern handelt es sich um ein Standardprodukt zur Ansteuerung elektrischer Maschinen, weshalb ein derartiger Drehstromsteller sehr kostengünstig erhältlich ist. Der Drehstromsteller kann auch ein Drehfeld mit einer Frequzen von 0, das heisst ein stehendes magnetisches Feld erzeugen, wobei der Drehwinkel des Feldes bzw. die Phase frei wählbar vorgebbar ist. Die Summe der Ströme im Sternpunkt ist 0, da die Spulen miteinander verkoppelt sind.

Ein weiterer Vorteil ist darin zu sehen, dass ein konventioneller, dreiphasiger Drehstromsteller meistens einen integrierten Microcontroller aufweist, welcher für Regelaufgaben verwendbar ist. Zur Verwendung des Drehstromstellers als Ansteuervorrichtung für ein aktives magnetisches Lager bedarf es eines entsprechend angepassten Regelverfahrens, das üblicherweise in Form von Programmzeilen (Software) im Microcontroller des Drehstromstellers abgelegt werden kann. Somit kann die an sich aufwendige Signalverarbeitung weitgehend vom im Drehstromsteller integrierten Microcontroller durchgeführt werden, was Kosten für eine zusätzliche Signalverarbeitungsvorrichtung erspart.

Die erfindungsgemässe aktive, magnetische Lagervorrichtung kann als ein Innenläufer, d.h. mit einem innenliegenden Rotor, oder als ein Aussenläufer, d.h. mit einem die Elektromagnete aussen umgebenden Rotor, ausgestaltet sein. Das aktive, magnetische Lager erfordert eine Vormagnetisierung, welche durch ein Permanentmagnet oder durch eine Spule mit einem Gleichstromanteil erzeugbar ist.

In einer weiteren vorteilhaften Ausgestaltung der Erfindung weist die magnetische Lagervorrichtung zweite Mittel auf, welche die Drehfeldmaschinenstatoren miteinander magnetisch koppeln. Diese zweiten Mittel können zum Beispiel Flussleitteile und/oder ein Gehäuse aus ferromagnetischen Material sein, welche die beiden Drehfeldmaschinenstatoren magnetisch miteinander verkoppeln.

In einer vorteilhaften Ausführungsvariante besteht die magnetische Lagervorrichtung aus zwei Drehfeldmaschinenstatoren mit zweipoliger Drehstromwicklung welche in einer zu einem Rotor axialen Richtung versetzt und bezüglich dem Rotor rotationssymmetrisch angeordnet sind. Der Rotor besteht aus einem ferromagnetischen Material. Die beiden Drehfeldmaschinenstatoren sind mittels Flussleitteilen und/oder einem Gehäuse aus ferromagnetischen Material wie z.B. Gusseisen oder Stahl magnetisch miteinander verkoppelt. Der magnetische Unipolarfluss kann durch einen Gleichstromanteil in zumindest einer der Drehstromwicklungen oder durch eine Axialspule oder durch einen Permanentmagneten erzeugt werden, welcher im Luftspalt des einen Drehfeldmaschinenstators rotationssymmetrisch nach innen, d.h. aus dem Stator heraus und in den Rotor hinein verlaufend gerichtet ist, und im Luftspalt des andern Drehfeldmaschinenstators rotationssymmetrisch nach aussen, d.h. aus dem Rotor hinaus und in den Stator hinein verlaufend gerichtet ist. Der magnetische Unipolarflusskreis schliesst sich in zum Rotor axialer Richtung einerseits über den Rotor selbst und andererseits über die Flussleitteile und/oder das Gehäuse aus ferromagnetischem Material. Wird ein Drehfeldmaschinenstator mit einer dreiphasigen Drehstromwicklung verwendet, und der magnetische Unipolarfluss mit dieser Drehstromwicklung erzeugt, so ist hierzu auf Grund des Gleichstromanteils ein belastbarer Sternpunkt notwendig, da ein Sternpunktstrom fliesst. Der Gleichstromanteil in der Dreiphasenwicklung bildet somit das erste Mittel zur Erzeugung des Unipolarflusses. Zusätzlich zum magnetischen Unipolarfluss kann in jeder Drehstromwicklung durch einen durch die zweipolige Drehstromwicklung fliessenden Strom ein zweipoliger magnetischer Fluss, im folgenden als ein Radialsteuerfluss bezeichnet, erzeugt werden. Abgesehen von der magnetischen Sättigung kann der Radialsteuerfluss jeder Drehstromwicklung durch entsprechende Ansteuerung einen beliebigen Betrag und eine beliebige radial verlaufende Richtung einnehmen. Die beiden bei zwei Drehfeldmaschinenstatoren vorhanden magnetischen Radialsteuerflusskreise schliessen sich in radialer Richtung über die jeweiligen Drehfeldmaschinenstatoren und den von diesen umgebenen Rotorbereich. Die Radialsteuerflusskreise jedes Drehfeldmaschinenstators sind voneinander vollkommen entkoppelt und lassen sich über den Drehstromanteil der Drehstromwicklungen einstellen, wobei die Drehfrequenz auch 0 sein kann. Nach dem Prinzip der feldorientierten Regelung kann über die Drehfeldwicklung in dem Drehfeldmaschinenstator ein Flussvektor mit beliebigem Betrag und beliebiger Richtung erzeugt werden. Der magnetische Unipolarfluss und der Radialsteuerfluss verstärken sich dort gegenseitig wo sie in die selbe Richtung zeigen, und schwächen sich dort wo sie in die entgegengesetzte Richtung zeigen. Durch die daraus resultierende zentrische Asymmetrie der magnetischen Felder wirken im Bereiche der Drehfeldstatoren magnetische, in radialer Richtung wirkende Zugkräfte auf den Rotor. Da diese Zugkräfte in Betrag und Richtung frei ansteuerbar und regelbar sind, lassen sie sich als magnetische Lagerkräfte nutzen. Der Unipolarfluss wird vorzugsweise konstant gehalten, kann aber zum Beispiel zur Einstellung der Lagerparameter ebenfalls verändert werden.

In einer weiteren Ausgestaltung der Erfindung wird der magnetische Unipolarfluss der magnetischen Lagervorrichtung nicht durch einen Gleichstromanteil in den Drehstromwicklungen erzeugt, sondern durch eine separate axiale Spule oder durch Permanentmagnete, welche magnetisch mit dem Drehfeldmaschinenstator verkoppelt sind. Ein Vorteil dieser Ausführungsform ist, dass für den bevorzugten Fall von dreiphasigen Drehstromwicklungen kein belastbarer Sternpunkt notwendig ist, da die Summe der drei Phasenströme immer = 0 ist. Weiter fallen die mit der Erzeugung des Unipolarflusses verbundenen Kupferverluste nicht in den Drehstrommaschinenstatoren an, weshalb bei gleicher thermischer Auslegung höhere Steuerströme für die Radialsteuerflüsse und damit höhere Lagerkräfte erreichbar sind. Im Falle der permanentmagnetischen Erregung des Unipolarflusses fallen überhaupt keine Verluste an.

Eine besonders einfache Ausführungsform einer magnetischen Lagervorrichtung ist erhältlich, wenn die Drehfeldmaschinenwicklungen mit drei diskreten Spulen, eine pro Phase, ausgebildet sind, wobei eine derartige Ausführungsform in der Theorie der elektrischen Maschinen als eine 3T-Ausführung bezeichnet wird. Die diskreten Spulen lassen sich ausserhalb des Stators wickeln und anschliessend als ganzes in diesen einlegen. Die genannte Konstruktion ermöglicht zudem kleine Wickelköpfe, weshalb sie bei begrenzten axialen Abmessungen von besonderem Vorteil ist.

Werden die Drehstromwicklungen der beiden Drehfeldmaschinenstatoren mit entgegengesetztem Wicklungssinn parallel oder in Serie geschaltet so zeigen die radialen magnetischen Kräfte bei beiden Statoren immer in die selbe Richtung. Mit einer derartigen Anordnung lässt sich ein Radialmagnetlager bilden. Sinn macht eine solche Anordnung vor allem in der vorgängig beschriebenen Ausführungsform von Drehfeldmaschinenstatoren mit nur drei diskreten Spulen in 3T-Anordnung. In dieser Ausführungsform ist ein Radialmagnetlager mit geringen axialen Abmessungen realisierbar. Der in axialer Richtung vorhandene Raum zwischen den beiden Drehfeldmaschinenstatoren, welcher durch die Wickelköpfe bedingt ist, lässt sich zur Anordnung von Positionssensoren zum messen der Rotorposition nutzen. Der Vorteil einer solchen Anordnung liegt neben der Platzersparnis in der Übereinstimmung zwischen dem Ort der Positionsmessung und dem Ort der mittleren Kraftbildung.

Indem der Durchmesser des Rotors im Bereich der Drehfeldmaschinenstatoren leicht grösser gewählt wird als im übrigen Bereich, lässt sich zusätzlich zur aktiven radialen magnetischen Lagerung eine passive axiale magnetische Lagerung erreichen, auf Grund der auftretenden Reluktanzkräfte. Weiter verstärken lässt sich dieser Effekt durch zusätzliche konzentrische Schlitze im Rotor und in den Statoren.

Die vorhin beschriebene passive axiale magnetische Lagerung des Rotors weist nur eine geringe Steifigkeit und Dämpfung auf. Eine weitere vorteilhafte Ausgestaltung der Erfindung ist darin zu sehen, dass für die beiden Drehfeldmaschinenstatoren zwei getrennte, einander entgegengesetzt gerichtete Unipolarflusskreise aufgebaut werden, wobei die beiden Unipolarflüsse über Flussleitelemente im Stator axial in einen mit dem Rotor fest verbundenen und zwischen den Drehfeldmaschinenstatoren angeordneten, Ring aus ferromagnetischem Material, im folgenden Axiallagerscheibe genannt geleitet werden, von besagter Axiallagerscheibe radial zum Rotor geführt werden und sich über diesen zu den Drehfeldmaschinenstatoren schliessen. Wie vorgängig beschrieben können über die Drehfeldmaschinenstatoren radial wirkende magnetische Lagerkräfte erzeugt werden. Über eine zusätzliche im Stator zwischen den Flussleitelementen angeordnete, konzentrisch zur Welle verlaufende Ringspule, im folgenden Axialringspule genannt, kann nun ein weiterer Steuerfluss, im folgenden Axialsteuerfluss genannt, erregt werden. Der besagte Axialsteuerfluss schliesst sich über einen zwischen den Flussleitelementen angeordneten, konzentrisch um die Spule angeordneten Flussleitring, über die Flussleitelemente und axial über die Axiallagerscheibe. Die beiden Unipolarflüsse treten nun auf beiden Seiten der Axiallagerscheibe in senkrechter Richtung verlaufend in diese ein. Der Axialsteuerfluss tritt auf der einen Seite senkrecht in die Axiallagerscheibe ein und auf der anderen Seite senkrecht aus der Axiallagerscheibe aus. Auf der einen Seite der Axiallagerscheibe verstärkt somit der Axialsteuerfluss den Unipolarfluss und auf der anderen Seite schwächt der Axialsteuerfluss den Unipolarfluss. Auf die Axiallagerscheibe wirkt somit eine axial gerichtete magnetische Zugkraft, welche in Richtung der höheren Flussdichte zeigt. Die besagte axial gerichtete magnetische Zugkraft lässt sich über den Strom in der Axialringspule in Betrag und Vorzeichen steuern. Durch eine übergeordnete Positionsregelung wird eine aktive axiale magnetische Lagerung des Rotors möglich.

Eine weitere vorteilhafte Ausgestaltung der Erfindung ist darin zu sehen, dass, wie vorgängig beschrieben, zwei Unipolarflusskreise aufgebaut sind, die aber nicht über ein Axialmagnetlager sondern über einen geschalteten Reluktanzmotor (in Englisch bezeichnet als "permanent magnet biased switched reluctance motor"), einen synchronen Reluktanzmotor oder einen Schrittmotor, welcher zwischen den Drehfeldmaschinenstatoren angeordnet ist, zum Rotor hin verlaufen. Der Reluktanzmotor oder Schrittmotor wird dann durch den Unipolarfluss magnetisch vorgespannt.

In einer weiteren vorteilhaften Ausgestaltung der erfindungsgemässen Anordnung ist der Rotor im Bereiche der beiden Statoren mit einem Gleichstrombelag beaufschlagt, womit es möglich ist zusätzlich zu den Lagerkräften, nach dem Prinzip des Unipolarmotors, ein Drehmoment zu erzeugen. Eine derartige Anordnung weist den Nachteil auf, dass der Gleichstrom über Schleifringe dem Rotor zuzuführen ist. Eine derartige Anordnung ist in Bereichen anwendbar wo sowieso keine absolute Berührungsfreiheit zwischen Rotor und Stator gegeben ist, z. B. für die Lagerung und den Antrieb von Anoden in Röntgenröhren.

Eine weitere vorteilhafte Ausgestaltung der Erfindung besteht darin, zusätzlich zur zweipoligen Drehfeldwicklung, die zur Steuerung der Radialmagnetlagerkräfte genutzt wird, eine Drehstromwicklung mit einer Polpaarzahl grösser oder gleich drei in die Drehfeldmaschinenstatoren einzulegen. Durch diese Drehstromwicklung ist ein Drehfeld erzeugbar, welches unter bestimmten Bedingungen auch in Wechselwirkung mit dem Unipolarmagnetfeld und dem zweipoligen Radialsteuerfeld keine oder nur unwesentliche Radialkräfte auf den Rotor hervorruft. Wird nun der Rotor mit einer Kurzschlusswicklung der selben Polpaarzahl versehen, so lässt sich dieser über das Drehfeld nach dem Prinzip des Induktionsmotors antreiben. Mit einem Permanentmagnetrotor oder einem Reluktanzmaschinenrotor mit der selben Polpaarzahl ist der Rotor ebenfalls antreibbar.

Nachfolgend wird die Erfindung anhand von Ausführungsbeispielen im Zusammenhang mit den Zeichnungen näher erläutert.

Es zeigen:

| | |
|---|---|
| Fig. 1 | Das Grundprinzip der erfindungsgemässen magnetischen Lagervorrichung mit zwei Drehfeldmaschinenstatoren; |
| Fig. 1a | einen Querschnitt durch einen Drehfeldmaschinenstator entlang der Linie (A-A) sowie die entsprechenden Unipolarflusslinien und Radialsteuerflusslinien; |
| Fig. 1b | einen Querschnitt durch einen Drehfeldmaschinenstator mit einem zweipoligen Magnetfeld; |
| Fig. 1c | einen Querschnitt durch einen Drehfeldmaschinenstator mit einer zweipoligen, dreiphasig ausgeführten Drehfeldwicklung; |
| Fig. 2 | eine weitere Ausführungsform der magnetischen Lagervorrichtung mit einer Axialringspule zur Erzeugung des Unipolarflusses; |
| Fig. 3 | eine weitere Ausführungsform der magnetischen Lagervorrichtung mit einem Permanentmagneten zur Erzeugung des Unipolarflusses; |
| Fig. 4 | eine magnetische Lagervorrichtung in Kombination mit einem Unipolarmotor; |
| Fig. 5 | eine Ausführungsform der magnetischen Lagervorrichtung, bei welcher die dreiphasigen Drehstromwicklungen aus drei diskreten Spulen aufgebaut sind (3T-Wicklung) und bei welcher konstruktive Maßnahmen vorgesehen sind um ebenfalls eine passive magnetische Axiallagerung des Rotors zu erreichen; |
| Fig. 5a | eine weitere Ausführungsform einer magnetischen Lagervorrichtung; |
| Fig. 5b | eine elektrische Schaltung mit dreiphasigem Drehstromsteller zur Ansteuerung der dreiphasigen Drehfeldwicklung; |
| Fig. 5c | eine weitere Ausführungsform einer magnetischen Lagervorrichtung mit einer 6T-Wicklung; |
| Fig. 6 | ein Radialmagnetlager nach dem Prinzip der magnetischen Lagervorrichtung, bei der die Drehstromwicklungen der beiden Drehfeldmaschinenstatoren mit entgegengesetztem Wicklungssinn parallel oder in Serie geschaltet sind; |
| Fig. 6a | einen Schnitt durch ein Radialmagnetlager nach Fig. 6 mit einem.zusätzlichen Sensorbefestigungsring mit Positionssensoren, wobei der Sensorbefestigungsring zwischen den beiden Drehstrommaschinenstatoren angeordnet ist; |
| Fig. 6b | ein elektrisches Schaltbild zur Ansteuerung der Drehfeldwicklungen der Ausführungsform gemäss Fig. 6; |
| Fig. 6c | ein weiteres Ausführungsbeispiel einer magnetischen Lagervorrichtung; |
| Fig. 6d | ein elektrisches Schaltbild zur Ansteuerung der Drehfeldwicklungen der Ausführungsform gemäss Fig. 6c; |

Fig. 6e        ein weiteres Ausführungsbeispiel einer magnetischen Lagervorrichtung;

Fig. 6f        ein weiteres Ausführungsbeispiel einer magnetischen Lagervorrichtung;

Fig. 7        eine magnetische Lagervorrichtung mit einem zusätzlich in axialer Richtung ansteuerbaren Magnetlagerung;

Fig. 7b,7c        weitere Ausführungsbeispiele einer magnetischen Lagervorrichtung mit einer zusätzlich in axialer Richtung ansteuerbaren Magnetlagerung;

Fig. 8        eine magnetische Lagervorrichtung in Kombination mit einem durch einen magnetischen Unipolarfluss vorgespannten geschalteten Reluktanzmotor;

Fig. 8a        ein Querschnitt durch Fig. 8 entlang der Linie A-A;

Fig. 9        eine magnetische Lagervorrichtung mit einem Aussenrotor und einem Innenstator;

Fig. 10        eine Regelvorrichtung zur Ansteuerung der Drehfeldwicklungen der magnetischen Lagervorrichtung;

Fig. 11a,11b,11c        Ausführungsbeispiele von Sättigungsstellen zur Begrenzung des unipolaren magnetischen Flusses.

Figur 1 zeigt ein Ausführungsbeispiel der erfindungsgemässen magnetischen Lagervorrichtung für einen Rotor 1. Alle Teile sind rotationssymmetrisch um die Rotationsachse 100 angeordnet. Die beiden Drehfeldmaschinenstatoren 3, 4 sind einerseits über den Rotor 1 aus ferromagnetischem Material und andererseits über einen Flussleitring 16 aus ferromagnetischem Material oder das Gehäuse 18 aus ferromagnetischem Material magnetisch gekoppelt. Durch einen Gleichstromanteil in der Drehstromwicklung 5 und/oder in der Drehstromwicklung 6 wird ein magnetischer Unipolarfluss erregt. Dieser ist durch die beiden Unipolarflusslinien 8 und 9 angedeutet. Der Unipolarfluss zeigt im Luftspalt des Drehfeldmaschinenstators 3 rotationssymmetrisch nach innen und im Luftspalt des Drehfeldmaschinenstators 4 rotationssymmetrisch nach aussen. Dieser Sachverhalt wird in Figur 1a nochmals verdeutlicht.

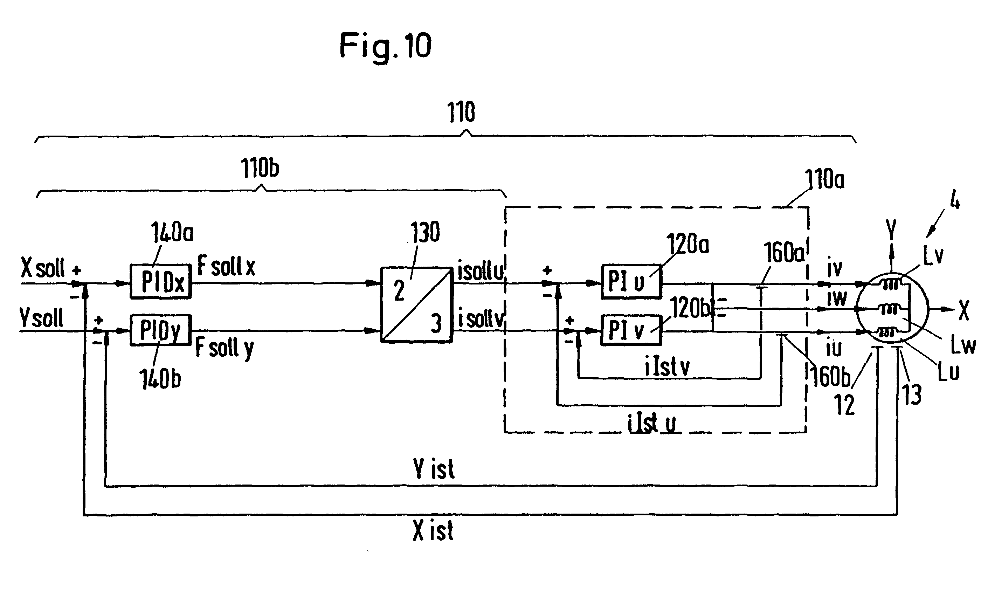

Figur 1a zeigt einen Schnitt entlang der Linie A-A gemäss Fig. 1 senkrecht zum Rotor 1 verlaufend durch den Drehfeldmaschinenstator 3 sowie durch den Rotor 1. Die sich im Drehfelmaschinenstator 3 befindlichen elektrischen Leiter der Drehstromwicklung 5 sind nicht dargestellt. Neben den Unipolarflusslinien 8 und 9 sind weitere Unipolarflusslinien 20, 21, 22, 23, 24, 25 dargestellt die alle vom Drehfeldmaschinenstator 3 nach innen zum Rotor 1 zeigen. Zusätzlich zum magnetischen Unipolarfluss können über die zweipoligen Drehstromwicklungen 5 und 6 sinusförmig verteilte zweipolige magnetische Radialsteuerflüsse, auch Steuerflüsse genannt, erzeugt werden. Abgesehen von der magnetischen Sättigung können diese einen beliebigen Betrag und eine beliebige Richtung einnehmen. Sie sind in Figur 1 durch die Steuerflusslinien 10 und 11 dargestellt. Figur 1a zeigt wiederum mehrere Steuerflusslinien 10, 19, 26, 27, 28, 29. Sie schliessen sich radial über den Drehfeldmaschinenstator 3 und den Rotor 1. In Figur 1a wird auch die Wirkungsweise der magnetischen Lagerkrafterzeugung deutlich. Der magnetische Unipolarfluss und der Steuerfluss verstärken sich dort gegenseitig, wo die beiden Flüsse in die selbe Richtung zeigen, in Figur 1a oben, und schwächen sich dort, wo die beiden Flüsse in die entgegengesetzte Richtung zeigen, in Figur 1a unten. Im Bereich des Drehfeldmaschinenstators 3 wirkt somit eine magnetische Zugkraft auf den Rotor 1, welche nach oben gerichtet ist. Die magnetische Zugkraft im Bereich des Drehfeldmaschinenstators 4 wirkt ebenfalls nach oben, da hier sowohl die Richtung des Unipolarflusses als auch des Steuerflusses umgekehrt sind. Für jeden Drehfeldmaschinenstator getrennt lässt sich nun die im Bereich des Drehfeldmaschinenstators insbesondere in radialer Richtung auf den Rotor wirkende magnetische Zugkraft allein über den Steuerfluss in Betrag und Richtung beliebig einstellen. Am Unipol, bei welchem der Unipolarfluss den Rotor verlässt, in Figur 1 beim Drehfeldmaschinenstator 4, zeigt die Richtung der magnetischen Zugkraft immer in die Richtung des Steuerflusses und ihr Betrag ist proportional zum Betrag des Steuerflusses. Am Unipol, bei welchem der Unioplarfluss zum Rotor hin zeigt, in Figur 1 beim Drehfeldmaschinenstator 3, zeigt die Richtung der magnetischen Zugkraft immer in die entgegengesetzte Richtung des Steuerflusses und ihr Betrag ist proportional zum Betrag des Steuerflusses. Die radiale Position des Rotors 1 wird über die Positionssensoren 12 und 13 beziehungsweise 14 und 15 erfasst. Eine in Figur 10 dargestellte Ansteuer- und Regelvorrichtung speist aufgrund dieser Messsignale die Phasenströme der Drehstromwicklungen 5, 6 derart, dass der Rotor 1 in der Schwebe gehalten wird.

Fig. 1b dient zur Begriffsklärung und zeigt einen Schnitt durch einen Stator 3 mit einer in axialer Richtung verlaufenden Wicklung Lu, die von einem Strom durchflossen ist und dabei das zweipolige, in radialer Richtung verlaufende magnetische Feld 10 erzeugt. Fig. 1c zeigt einen weiteren Schnitt durch den Stator 3 mit drei in axialer Richtung verlaufenden Wicklungen Lu, Lv, Lw, die separat ansteuerbar sind, und die derart ausgestaltet sind, dass ein zweipoliges magnetisches Feld 10 erzeugt wird. Mit diesen drei Wicklungen Lu,Lv,Lw ist bei einer entsprechenden Ansteuerung ein um die Achse 100 in Richtung m drehendes magnetisches Feld 10 erzeugbar, was als ein Drehfeld bezeichnet wird. Die Drehfrequenz kann auch 0 sein, sodass durch eine entsprechende Ansteuerung der Wicklungen Lu,Lv,Lw ein in einer vorgebbaren radialen Richtung verlaufendes magnetisches Feld 10 erzeugbar ist. Eine Wicklung mit welcher die Richtung des magnetischen, zweipoligen Feldes 10 vorgebbar ist, wie z.B. in Fig. 1c dargestellt, wird als eine zweipolige Drehfeldwicklung bezeichnet. In einer vorteilhaften Ausführungsform ist diese zweipolige Drehfeldwicklung, wie in Fig. 1c dargestellt, als eine dreiphasige Wicklung mit drei Phasen Lu,Lv,Lw ausgebildet. Die Statoren 3,4 gemäss Fig. 1 könnten eine derartige dreiphasig ausgebildete, zweipolige Drehfeldwicklung 5,6 aufweisen.

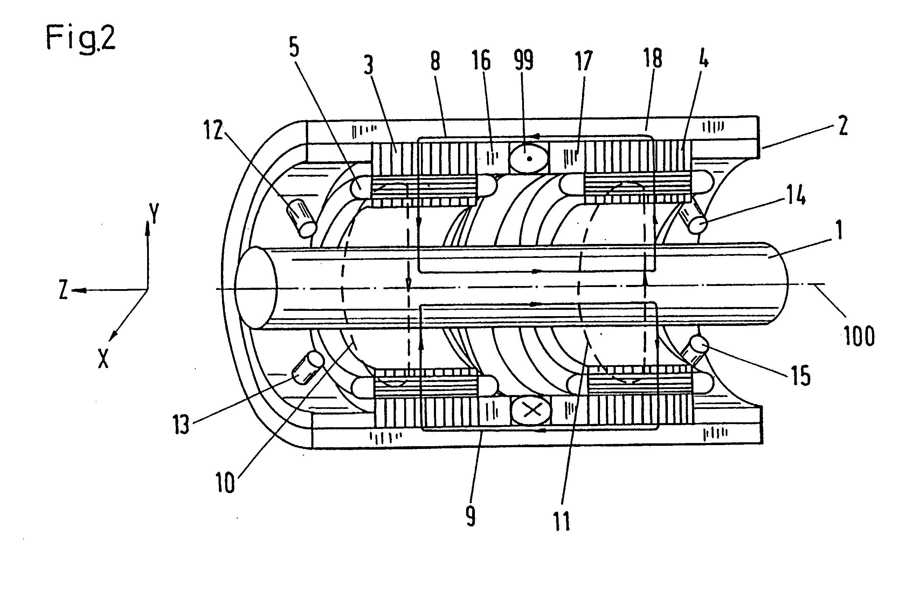

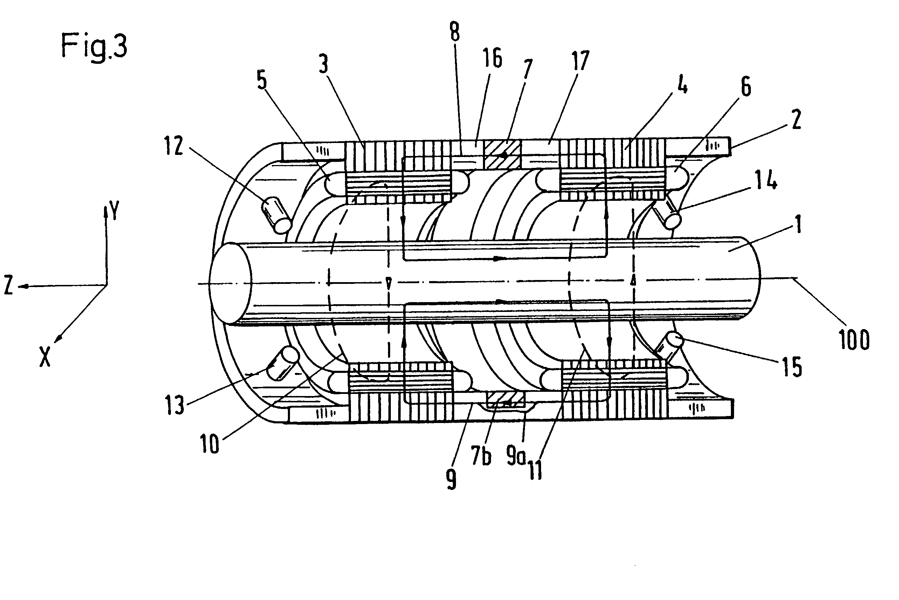

Zwei Ausführungsformen der erfindungsgemässen magnetischen Lagerung, bei welchen der Unipolarfluss nicht durch einen Gleichstromanteil in den Drehstromwicklungen 5 und 6 sondern durch ein anderes erstes Mittel erregt wird, sind in Figur 2 und 3 dargestellt. In Figur 2 ist das erste Mittel zum erregen des Unipolarflusses eine Axialringspule 99, welche zwischen den beiden Drehfeldmaschinenstatoren 3 und 4 und zwischen den Flussleitringen 16 und 17 angeordnet ist und konzentrisch zum Rotor 1 verläuft. In Figur 3 ist das erste Mittel zum erregen des Unipolarflusses ein axial magnetisierter Permanentmagnetring 7, welcher zwischen den beiden Drehfeldmaschinenstatoren 3 und 4 und zwischen den Flussleitringen 16 und 17 angeordnet ist. In diesem Fall muss, wie oben dargestellt, der gesamte Unipolarfluss über den Permanentmagnetring 7 und über die Flussleitringe 16 und 17 geführt werden. Ein Gehäuse aus ferromagnetischen Material kann hier nicht eingesetzt werden. Der Permanentmagnetring 7 kann auch, wie unten mit dem Permanentmagnetring 7b dargestellt, nur einen Teil der Gehäusebreite beanspruchen, sodass ein Teil des Unipolarflusses 9a über das Gehäuse 16,17 verläuft.

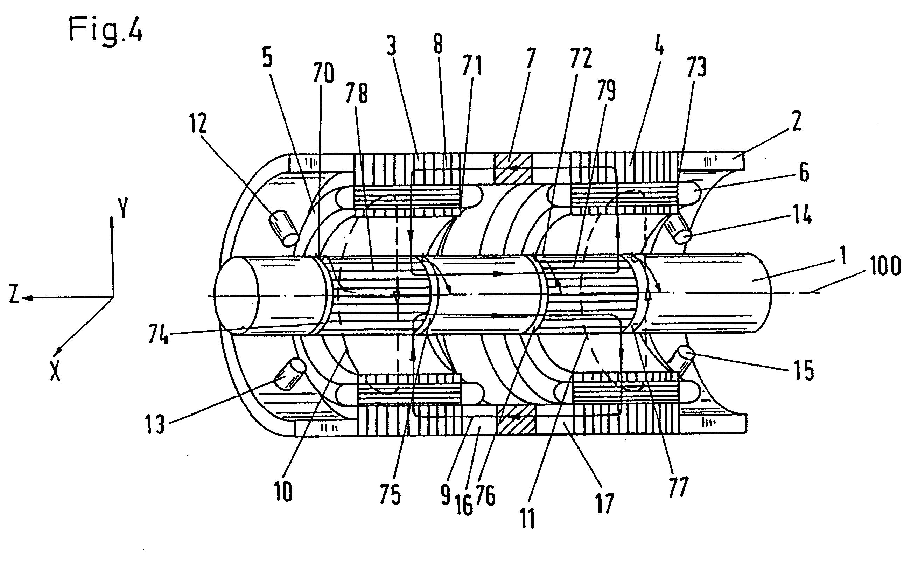

Wird in der erfindungsgemässen magnetischen Lagervorrichtung der Rotor 1 im Bereiche der beiden Statoren 3,4 mit einem Gleichstrombelag beaufschlagt, so ist es möglich, zusätzlich zu den Lagerkräften, nach dem Prinzip eines Unipolarmotors, ein Drehmoment zu erzeugen. Ein so gestalteter "lagerloser Unipolarmotor" ist in Figur 4 dargestellt. Der Gleichstrom wird über die Schleifer 70 und 71 und über die Schleifringe 74 und 75 dem Rotorbereich unter dem linken magnetischen Unipol, im Bereich des Drehfeldmaschinenstators 3, zugeführt, beziehungsweise über die Schleifer 72 und 73 und über die Schleifringe 76 und 77 dem Rotorbereich unter dem rechten magnetischen Unipol im Bereich des Drehfeldmaschinenstators 4 zugeführt. Der Strom wird auf dem Rotor über eine elektrisch leitende Schicht oder hier über Rotorstäbe 78, 79 vom Schleifring 74 zum Schleifring 75 beziehungsweise vom Schleifring 76 zum Schleifring 77 geleitet und bildet auf den Rotorbereichen unter den magnetischen Unipolen einen homogenen Strombelag.

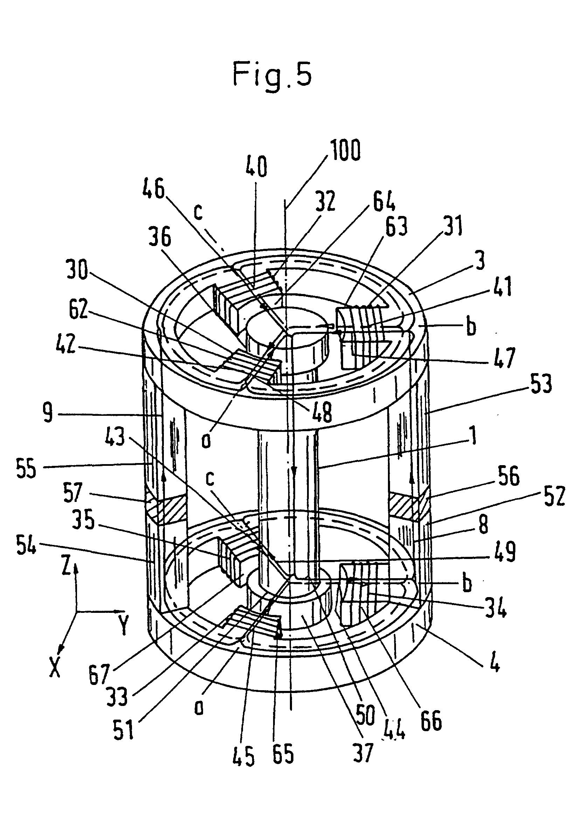

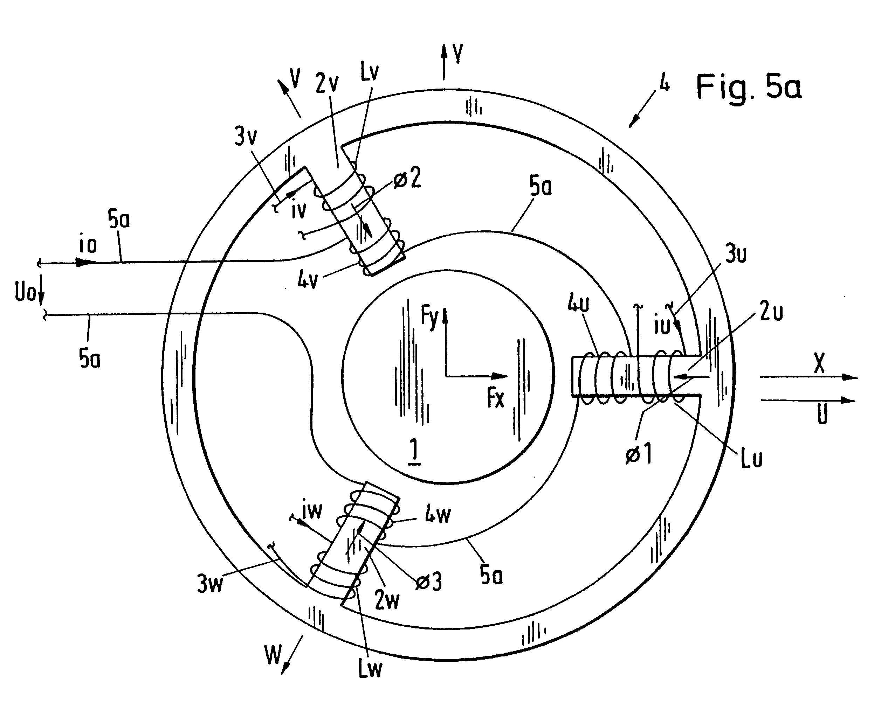

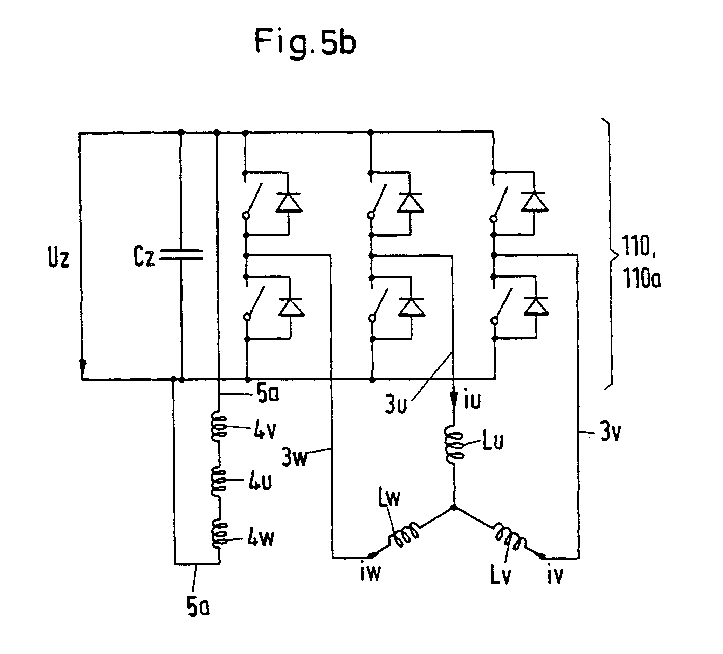

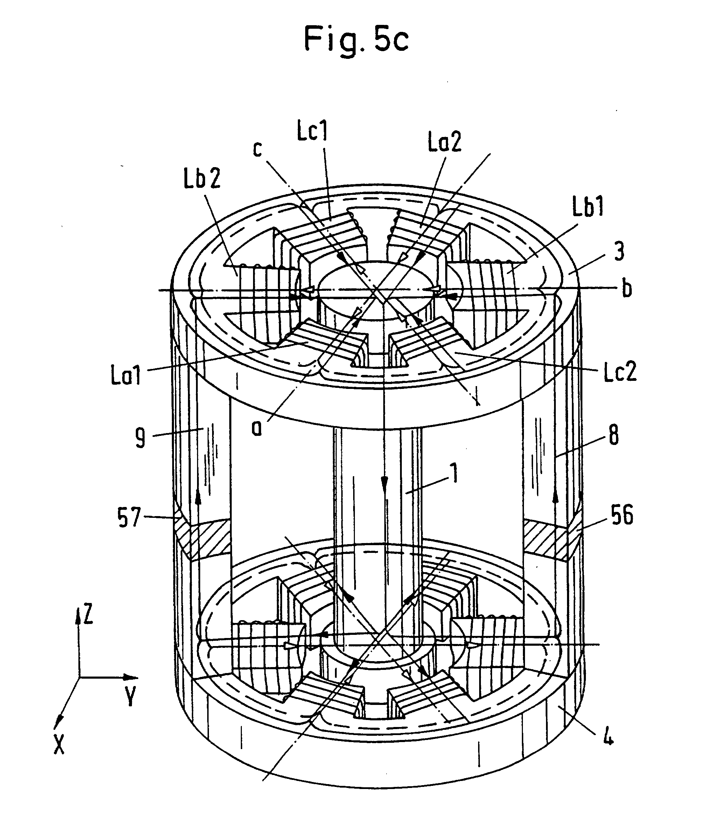

Figur 5 zeigt eine besonders einfache und platzsparende Ausführungsform der erfindungsgemässen magnetischen Lagervorrichtung. Die dreiphasig ausgestalteten Drehfeldmaschinenwicklungen 5 und 6 werden hier mit nur drei diskreten Spulen 30, 31 und 32 beziehungsweise 33, 34 und 35 gebildet. Eine solche Ausführungsform wird in der Theorie der elektrischen Maschinen eine 3T-Wicklung genannt. Der magnetische Unipolarfluss wird durch die axial magnetisierten Permanentmagnete 56 und 57 erregt und durch die Flussleitteile 52, 53 und 54, 55 vom Drehfeldmaschinenstator 4 zum Drehfeldmaschinenstator 3 geführt. Natürlich ist es auch möglich, hierfür einen Permanentmagnetring und ringförmige Flussleitteile zu verwenden. Im Drehfeldmaschinenstator 3 wird der Unipolarfluss über die drei Statorzähne 62, 63, 64 radial zum Rotor geführt und von diesem weiter zum Drehfeldmaschinenstator 4 geleitet wo er den Rotor wiederum radial durch die Statorzähne 65, 66, 67 verlässt. In Figur 5 wird der Unipolarflussverlauf im Drehfeldmaschinenstator 3 durch die Unipolarflusslinien 40, 41, 42 und im Drehfeldmaschinenstator 4 durch die Unipolarflusslinien 43, 44, 45 dargestellt. Der Steuerfluss im Drehfeldmaschinenstator 3 wird durch die drei diskreten Spulen 30, 31 und 32 erregt und wird durch die Steuerflusslinien 46, 47, und 48 dargestellt. Der Steuerfluss im Drehfeldmaschinenstator 4 wird durch die drei diskreten Spulen 33, 34 und 35 erregt und wird durch die Steuerflusslinien 49, 50, und 51 dargestellt. Sowohl im Drehfeldmaschinenstator 3 als auch im Drehfeldmaschinenstator 4 zeigen Unipolarfluss und Steuerfluss in der b-Achse in die selbe Richtung und in der a- und c- Achse in die entgegengesetzte Richtung. An beiden Drehfeldmaschinenstatoren 3,4 wirkt somit eine resultierende magnetische Zugkraft in b-Richtung. Im Drehfeldmaschinenstator 3 zeigt die resultierende magnetische Zugkraft also in entgegengesetzter Richtung zum Steuerflussvektor, da hier der Unipolarfluss nach innen zeigt. Im Drehfeldmaschinenstator 4 zeigt die resultierende magnetische Zugkraft in die selbe Richtung wie der Steuerflussvektor, da hier der Unipolarfluss nach aussen zeigt. Im Bereich 36 und 37 der Drehfeldmaschinenstatoren 3 und 4 wurde der Rotordurchmesser leicht grösser gewählt als im übrigen Bereich. Dadurch wird zusätzlich zur aktiven radialen magnetischen Lagerung eine passive axiale magnetische Lagerung auf Grund der Reluktanzkräfte erreicht.

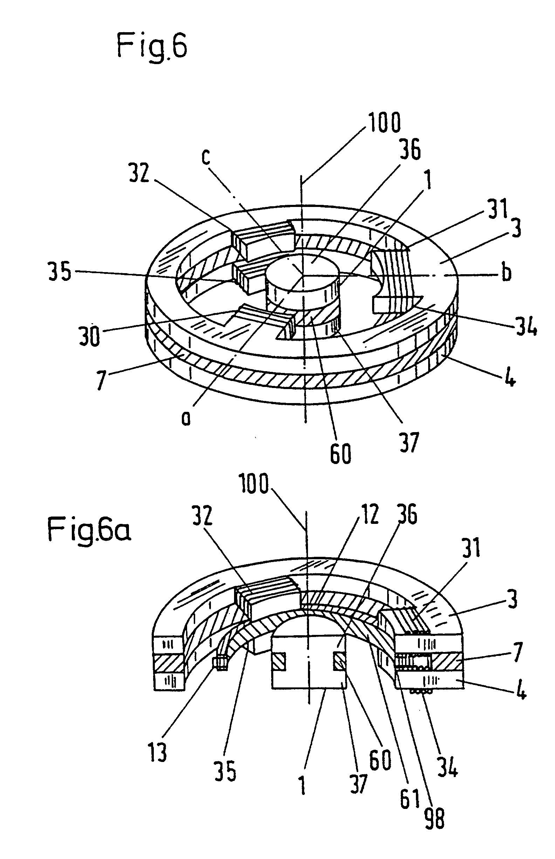

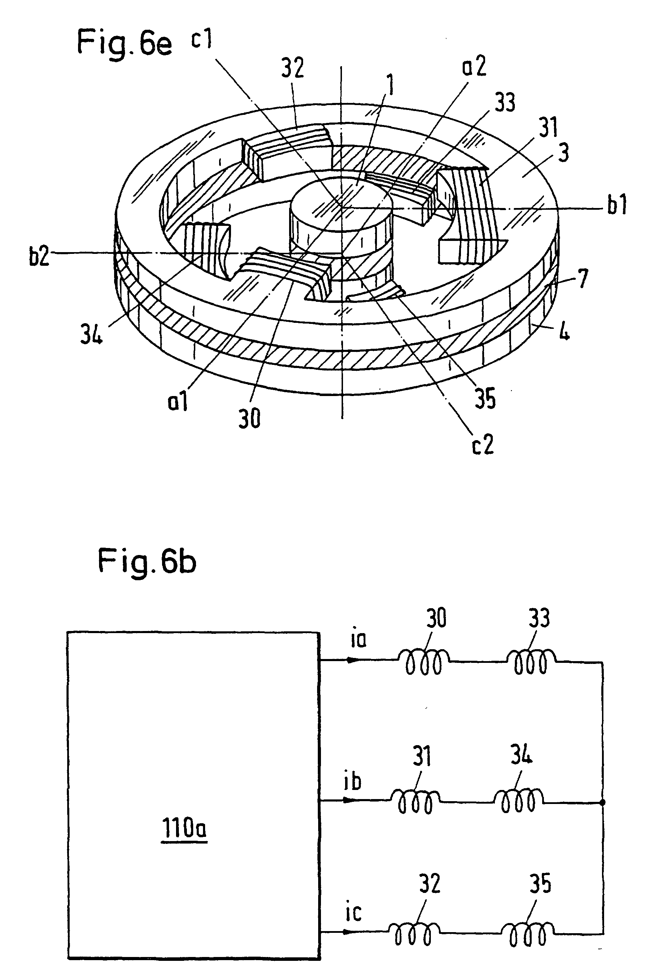

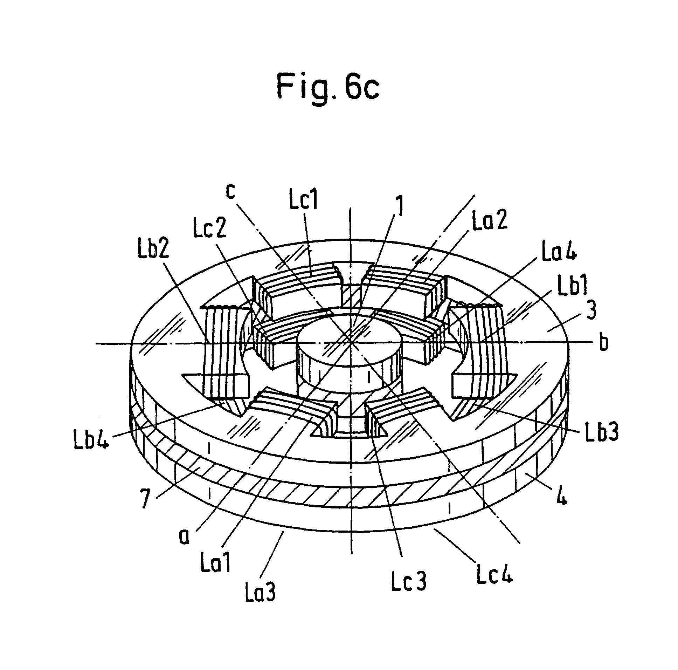

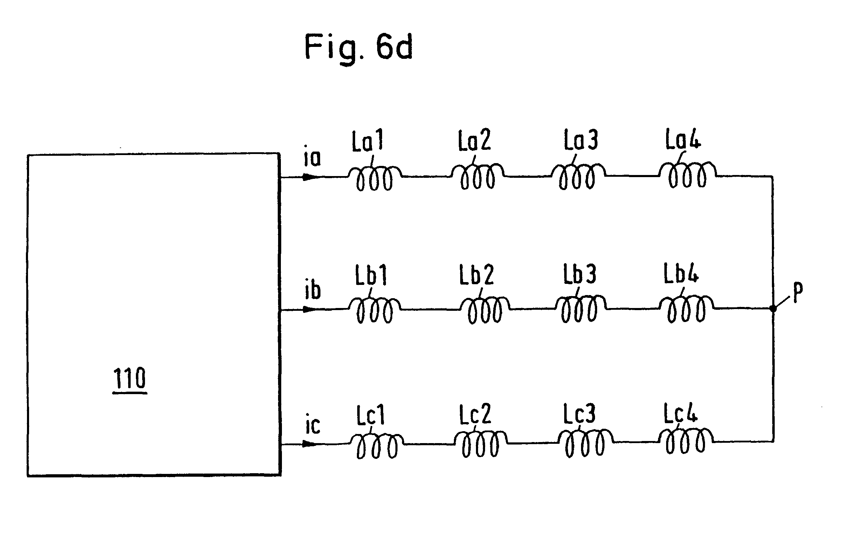

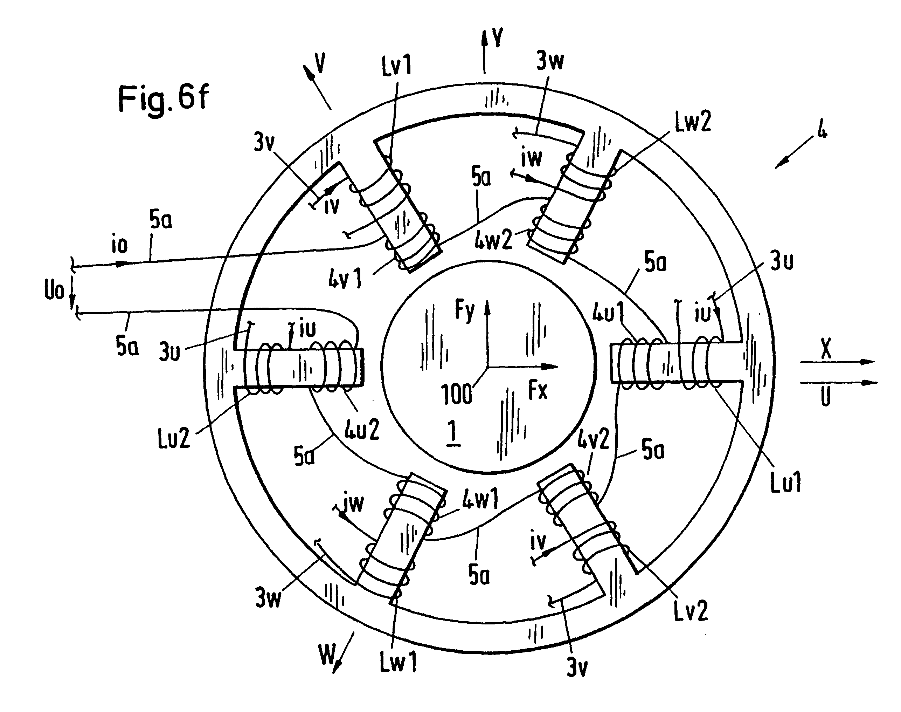

Werden die Drehstromwicklungen der beiden Drehfeldmaschinenstatoren 3,4 mit entgegengesetztem Wicklungssinn parallel oder in Serie geschaltet so zeigen die radialen magnetischen Kräfte unter beiden Statoren 3,4 immer in die selbe Richtung. Eine solche Anordnung ist in Figur 6 dargestellt. Sie zeigt eine Anordnung mit Drehfeldmaschinenstatoren 3 und 4 mit drei diskreten Spulen 30, 31, 32 und 33, 34, 35 in 3T-Anordnung. Die Spule 33 ist dabei aus zeichnerischen Gründen in der Figur 6 nicht sichtbar. Zur Erregung des magnetischen Unipolarflusses wird ein axial magnetisierter Permanentmagnetring 7 eingesetzt. Dieser kann natürlich auch aus einer Mehrzahl von permanentmagnetischen Ringsegmenten ausgebildet sein. Zusätzliche Flussleitringe sind in der beschriebenen Ausführungsform nicht notwendig, können aber zur besseren Ausnutzung des Magnetmaterials ebenfalls eingesetzt werden. Der Rotor 1 weist im Bereich 36 und 37 einen leicht grösseren Rotordurchmesser auf als im übrigen Bereich. Dadurch wird wie vorhin beschrieben zusätzlich zur aktiven radialen magnetischen Lagerung eine passive axiale magnetische Lagerung erreicht. Der Raum zwischen den beiden Drehfeldmaschinenstatoren 3,4 , der durch die Wickelköpfe bedingt ist, kann zur Montage von Positionssensoren 12,13 zum Messen der Rotorposition genutzt werden. Gemessen wird der Abstand von ständerfesten Sensoren 12,13 zum Sensormessring 60 auf dem Rotor 1, welcher Ring 60 zwischen den beiden Lagerbereichen 36 und 37 liegt. Ein Vorteil der Anordnung gemäss Fig. 6 liegt neben der Platzersparnis in der örtlichen Übereinstimmung zwischen der Positionsmessung und der mittleren Kraftbildung. Die Sensoren 12, 13 selbst sind in Figur 6 aus Gründen der Übersichtlichkeit nicht dargestellt. Figur 6a zeigt einen Schnitt durch die Anordnung in Figur 6 mit den Positionssensoren 12, 13 und 98. Die Positionssensoren 13, zum Beispiel Wirbelstromsensoren, sind in einem Sensorbefestigungsring 61 montiert welcher seinerseits zwischen den Statorzähnen befestigt ist.

In einer vorteilhaften Ausführungsform des Rotors 1 ist dieser derart ausgestaltet, dass der mit Ausnahme des Sensormessrings 60 ferromagnetisch ausgestaltete Rotor 1 im Bereich der Drehfeldmaschinenstatoren 3,4 liegende Teile 36,37 aufweist, welche einen grösseren Durchmesser aufweisen als der übrige Teil des Rotors 1, um die bei einer axialen Auslenkung des Rotors 1 in axialer Richtung wirkenden Reluktanzkräfte zu erhöhen und damit eine passive Magnetlagerung des Rotors 1 in axialer Richtung zu bewirken.

Fig. 5a zeigt in einer Seitenansicht ein Ausführungsbeispiel einer radialen, aktiven magnetischen Lagervorrichtung. Der als Welle ausgestaltete Rotor 1 wird durch drei diskret ausgestaltete, in Umfangsrichtung um je 120° versetzt angeordnete Elektromagnete 2u,2v,2w berührungslos in der Schwebe gehalten. Jeder Elektromagnet 2u,2v, 2w weist eine Spule Lu,Lv,Lw auf zur Erzeugung eines zeitlich variablen, magnetischen Flusses $\phi1$, $\phi2$, $\phi3$. Jede Spule Lu,Lv,Lw ist über elektrische Verbindungsleitungen 3u,3v,3w mit einem nicht dargestellten Drehstromsteller 110 verbunden. Das magnetische Lager erfordert eine Vormagnetisierung, welche im vorliegenden Ausführungsbeispiel durch drei mit einem Gleichstrom durchflossene Spulen 4u, 4v, 4w erzeugt wird. An jedem Spulenkern 2u, 2v, 2w ist eine gleichsinnig gewickelte Spule 4u, 4v, 4w angeordnet. Die Spulen 4u, 4v, 4w sind über einen elektrischen Leiter 5a in einer Serieschaltung miteinander verbunden und sind daher von einem gemeinsamen Gleichstrom io durchflossen. Weiter ist die horizontale X-Richtung und die vertikale Y-Richtung des Lagers dargestellt, sowie die auf die Welle 1 wirkenden Kräfte Fx und Fy. Die einzelnen Elektromagnete 2u,2v,2w sind mit einer Verlaufsrichtung u,v,w, um je 120° in Umfangsrichtung der Welle 1 versetzt angeordnet.

Fig. 5b zeigt die elektrische Verbindung eines dreiphasigen Drehstromstellers 110 mit den Spulen Lu,Lv,Lw des radialen, aktiven, magnetischen Lagers gemäss Fig. 5a. Der Drehstromsteller 110 wird mit einer Zwischenkreisspannung Uz betrieben und weist einen Kondensator Cz auf. Der Drehstromsteller 110 umfasst ein Leistungsteil 110a sowie eine nicht dargestellte Signalverarbeitungsvorrichtung 110b, welche einen Mikrocontroller umfasst. Die drei Spulen Lu,Lv,Lw sind in einer Sternschaltung miteinander verbunden, wobei die drei Phasenströme iu, iv, iw über die elektrischen Leiter 3u, 3v, 3w vom Leistungsteil 110a des Drehstromstellers 110 den Spulen Lu, Lv, Lw zugeführt sind. Der Leistungsteil 110a weist drei Brückenzweige auf, welche mit je einem elektrischen Leiter 3u, 3v, 3w verbunden sind. Im dargestellten Ausführungsbeispiel sind die drei eine Vormagnetisierung bewirkenden Spulen 4u, 4v, 4w über den elektrischen Leiter 5a in einer Serieschaltung an die Zwischenkreisspannung Uz angelegt, sodass alle Spulen 4u, 4v, 4w von einem gemeinsamen Strom io durchflossen sind.

Der Zusammenhang zwischen den auf den Rotor 1 wirkenden Kräften Fx und Fy und den an den Spulen Lu, Lv, Lw anliegenden Strömen iu, iv, iw gestaltet sich wie folgt:

k bedeutet in den folgenden Gleichungen eine Proportionalitätskonstante.

Für die Kraft Fx gilt:

$$F_x = (i_u + i_o)k - (i_v + i_o)k \sin(30°) - (i_w + i_o)\, k \sin(30°)$$

zusammengefasst:

$$F_x = k\, (\, i_u - \tfrac{1}{2} i_v - \tfrac{1}{2} i_w) \tag{I}$$

Für die Kraft Fy gilt:

$$F_y = (i_v + i_o)k \cos(30°) - (i_w + i_o)k \cos(30°)$$

zusammengefasst:

$$F_y = k \sqrt{3}/2 \, (i_v - i_w) \qquad (II)$$

Für einen dreiphasigen Drehstromsteller 110 gilt immer die Nebenbedingung, dass die Summe aller Ströme gleich Null ist. Daher gilt die zusätzliche Bedingung:

$$i_u + i_v + i_w = 0 \qquad (III)$$

Somit ergibt sich bei der Verwendung eines dreiphasigen Drehstromstellers (Gleichung III) zur Ansteuerung eines aktiven, magnetischen Lagers der folgende Zusammenhang zwischen den Strömen iu, iv, iw der einzelnen Spulen Lu, Lv, Lw und der auf die Welle 1 wirkenden Kraft Fx, Fy:

$$\begin{bmatrix} i_u \\ i_v \\ i_w \end{bmatrix} = \frac{2}{3k} \bullet \begin{bmatrix} 1 & 0 \\ -\tfrac{1}{2} & \sqrt{3}/2 \\ -\tfrac{1}{2} & -\sqrt{3}/2 \end{bmatrix} \bullet \begin{bmatrix} F_x \\ F_y \end{bmatrix} \qquad (IV)$$

Aus der Gleichung IV ist ersichtlich, dass bei der Verwendung eines konventionellen, dreiphasigen Drehstromstellers die auf die Welle 1 wirkende Kraft Fx und Fy steuerbar ist. Die beiden Kraftkomponenten Fx, Fy stehen orthogonal zueinander, sodass mit diesen beiden Komponenten Fx, Fy eine in beliebiger, radialer Richtung auf die Welle 1 wirkende Kraft erzeugbar ist. Somit wird im magnetischen Lager durch die Überlagerung einer Gleichstromdurchflutung mit einer Drehstromdurchflutung eine Gesamtdurchflutung erzeugt, welche erlaubt eine in beliebiger, radialer Richtung wirkende Kraft zu erzeugen. Dabei ist immer die Nebenbedingung erfüllt, dass die Summe der Ströme iu, iv, iw gleich Null ist, sodass ein dreiphasiger Drehstomsteller verwendbar ist.

Der Vormagnetisierungsstrom io kürzt sich heraus aus den Gleichungen I bis IV und ist daher bei der Regelung der Ströme iu, iv, iw nicht weiter zu berücksichtigen. Der Vormagnetisierungsstrom io geht nur in den Faktor k ein. Der Vormagnetisierungsstrom io wird vorteilhafterweise derart gewählt, dass dieser Strom io etwa die Hälfte der Sättigungsflussdichte der Spulenkerne 2u, 2v, 2w erzeugt.

Fig. 10 zeigt einen dreiphasigen Drehstromsteller 110, welcher ein dreiphasiges Leistungsteil 110a umfasst, sowie weitere einen Regelkreis bildende elektronische Komponenten 110b. Der Drehstromsteller 110 umfasst insbesondere einen programmierbaren Mikroprozessor, welcher die jeweils erforderliche Regelung durch eine entsprechende Software zu programmieren erlaubt.

Das in Fig. 10 dargestellte Ausführungsbeispiel eines Drehstromstellers 110 weist eine Reglerstruktur zur Ansteuerung der in der Figur 5a dargestellten, aktiven magnetischen Lagervorrichtung auf. Von untergeordneter Bedeutung und daher nicht dargestellt ist der Vormagnetisierungsstrom io. Die drei Spulen Lu, Lv, Lw des Drehfeldmaschinenstators 4 werden vom Leistungsteil 110a mit den Strömen iu, iv, iw versorgt. Zwei am Drehfeldmaschinenstator 4 angeordnete Lagesensoren 12, 13 erfassen die jeweilige Lage des Rotor 1 in X- und Y-Richtung und erzeugen ein entsprechendes Lagesignal Xist, Yist, welches einer Vergleichsvorrichtung zugeführt wird. Diese Vergleichsvorrichtung ermittelt die Abweichung zwischen einem vorgegebenen Sollwert Xsoll, Ysoll und dem gemessenen Istwert Xist, Yist, und führt das Differenzsignal einem als PID-Regler ausgestalteten Lageregler 140a, 140b zu. Die beiden Lageregler 140a, 140b berechnen die in X- und Y-Richtung erforderliche Kraftkomponente Fsollx, Fsolly, die auf den Rotor 1 zu bewirken ist, um den Istwert Xist, Yist mit dem vorgegebenen Sollwert Xsoll, Ysoll in Übereinstimmung zu bringen. Die Kraftkomponenten Fsollx, Fsolly werden einer 2/3-Phasen-Transformationsvorrichtung 130 zugeführt, welche, unter Verwendung der Gleichung IV, die erforderlichen Stromsollwerte isollu, isollv berechnet. Dem Leistungsteil 110a sind nur zwei Stromsollwerte vorzugeben, da der dritte Stromwert durch die Bedingung, dass die Summe aller Ströme gleich Null ist, bereits bestimmt ist. Stromsensoren 160a, 160b überwachen die aktuellen Stromwerte iistu, iistv, welche mit den Sollwerten isollu, isollv verglichen werden und die Differenzwerte den als PI-Reglern ausgebildeten Stromreglern 120a, 120b zugeführt werden, welche daraufhin über Stromsteller die Ströme iu, iv bewirken. Somit ist ein aktives, magnetisches Lager auf einfache und kostengünstige Weise mit einem dreiphasigen Drehstromsteller 110 betreibbar.

Die drei Spulen Lu,Lv,Lw der magnetischen Lagervorrichtung gemäss Fig. 5a sind in Fig. 5b in einer Sternschaltung miteinander verbunden. Die drei Spulen Lu,Lv,Lw können auch in einer Dreieckschaltung miteinander verbunden sein. Die Ansteuervorrichtung 110 ist nur als ein Ausführungsbeispiel zu betrachten. Die einzelnen Spulen Lu, Lv,Lw sind auch jeweils von einem separaten Stromsteller ansteuerbar, sodass für eine Anordnung gemäss Fig. 5b drei Stromsteller erforderlich sind zur Ansteuerung der Spulen Lu,Lv,Lw, sowie eine übergeordnete, nicht dargestellte Regelvorrichtung.

Fig. 6b zeigt die elektrische Verbindung eines dreiphasigen Drehstromstellers 110 mit den Spulen 30,31,32,34,35,36 der radialen, aktiven magnetischen Lagervorrichtung gemäss Fig. 6. Die Spulen jeder Phase a,b, c sind in Serie geschaltet, wobei jeweils zwei in Serie geschaltete Spulen 32,35 gegengleich gewickelt sind, sodass zum Beispiel die eine Spule 32 einen zum Rotor 1 hin gerichteten magnetischen Fluss erzeugt und die Spule 35 einen vom Rotor 1 wegführenden magnetischen Fluss erzeugt.

Die magnetische Lagervorrichtung gemäss Fig. 6c weist, im Gegensatz zur Ausführung gemäss Fig. 6, für jede Phase a,b,c diametral gegenüberliegende Spulen La1,La2;La3,La4;Lb1,Lb2;Lb3,Lb4;Lc1,Lc2;Lc3,Lc4 und Zähne auf, sodass zum Beispiel die Spulen Lc1,Lc2,Lc3,Lc4 eine Phase c bilden. Diese Anordnung der Spulen und Zähne führt, im Vergleich zur Ausführung gemäss Fig. 6, zu einem besseren, lineareren magnetischen Feldverlauf innerhalb des Luftspaltes. Insbesondere eine Auslenkung des Rotors 1 in radialer Richtung aus der Zentrumslage führt in der Ausführung gemäss Fig. 6 zu einem asymmetrischen Verlauf des magnetischen Feldes. Dieser Effekt tritt im Ausführungsbeispiel gemäss Fig. 6c in reduziertem Masse auf. Fig. 6d zeigt die elektrische Verbindung eines dreiphasigen Drehstromstellers 110 mit den Spulen des Ausführungsbeispieles gemäss Fig. 6c. Die Spulen einer Phase a,b,c sind jeweils in Serie geschaltet, so sind zum Beispiel die Spulen La1,La2,La3,La4 der Phase a in Serie geschalten. Durch die dreiphasige Ansteuerung der Spulen mit einem Drehstromsteller 110 sind die einzelnen Phasen a,b,c nicht mehr unabhängig voneinander ansteuerbar, denn es gilt immer die Nebenbedingung, dass die Summe der Ströme ia,ib,ic am Sternpunkt P gleich Null ist. Dadurch, dass eine Auslenkung des Rotors 1 beim Ausführungsbeispiel gemäss Fig. 6c eine geringere Auswirkung auf einen asymmetrischen Verlauf des magnetischen Feldes ausübt als im Ausführungsbeispiel gemäss Fig. 6, ist das Ausführungsbeispiel gemäss Fig. 6c präzieser ansteuerbar mit einem Drehstromsteller 110. Alle in der vorliegenden Offenbahrung dargestellten magnetischen Lagervorrichtungen lassen sich auch mit einer Mehrzahl individueller Stromsteller ansteuern, sodass auch das Ausführungsbeispiel gemäss Fig. 6c mit drei oder sechs separaten Stromstellern betreibbar ist.

Das Ausführungsbeispiel gemäss Fig. 5c ist ähnlich ausgestaltet wie das Ausführungsbeispiel gemäss Fig. 5, wobei jeder Drehfeldmaschinenstator 3,4 sechs in Umfangsrichtung verteilt angeordnete Zähne mit entsprechend sechs Spulen La1,La2,Lb1,Lb2,Lc1,Lc2 aufweist, wobei bezüglich der Rotationsachse gegenüberliegende Spulen La1,La2 jeweils von der gleichen Phase a,b,c gespeist sind. Beim Ausführungsbeispiel gemäss Fig. 5c ist jeder Drehfeldmaschinenstator 3,4 von einem separaten Drehstromsteller 110 angesteuert, sodass die Lage des Rotors 1 an beiden Drehfeldmaschinenstatoren 3,4 in radialer Richtung ansteuerbar und regelbar ist.

Ein weiteres Ausführungsbeispiel einer magnetischen Lagervorrichtung mit zwei Drehfeldmaschinenstatoren 3,4 mit jeweils drei in Umfangsrichtung verteilt angeordneten Zähnen und diskreten Spulen 30,31,32,33,34,35 ist in Fig. 6e dargestellt. Die Spulen 30,31,32; 33,34,35 jeder Phase a1,b1,c1;a2,b2,c2 sind bei jedem Drehfeldmaschinenstator 3,4 in Umfangsrichtung um jeweils 120° versetzt angeordnet, wobei die Spulen 30,31,32; 33,34,35 der beiden Drehfeldmaschinenstatoren 3,4 zudem in Umfangsrichtung um jeweils 60° gegeneinander versetzt angeordnet sind. Diese Anordnung bewirkt, im Vergleich zur Ausführung gemäss Fig. 6, eine homogenere Verteilung des magnetischen Feldes im Raum zwischen dem Stator 3,4 und dem Rotor 1, insbesondere bei einer Auslenkung des Rotors 1 in radialer Richtung aus der Mittenlage.

Fig. 6f zeigt ein weiteres Ausführungsbeispiel eines Drehfeldmaschinenstators 4 der, ansonst gleich aufgebaut wie das Ausführungsbeispiel gemäss Fig. 5a, sechs in Umfangsrichtnung des Drehfeldmaschinenstators 4 verteilt angeordnete Zähne mit Spulen Lu1, Lu2, Lv1, Lv2, Lw1, Lw2 aufweist, wobei bezüglich dem Drehzentrum 100 gegenüberliegend angeordnete Spulen Lu1,Lu2;Lv1,Lv2;Lw1,Lw2 eine Phase ausbilden und elektrisch in Serie geschaltet sind. Zudem weist jeder Zahn eine gleichsinnig gewickelte Spule 4u1,4u2,4v1,4v2,4w1,4w2 auf zur Erzeugung des Unipolarflusses, wobei diese Spulen über einen elektrischen Leiter 5a in Serie geschaltet mit einer Gleichspannungsquelle Uo verbunden sind.

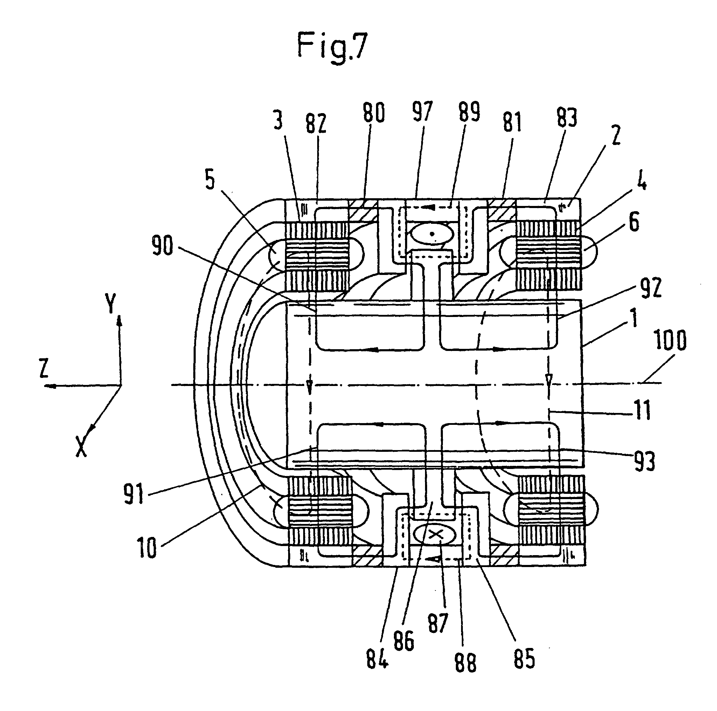

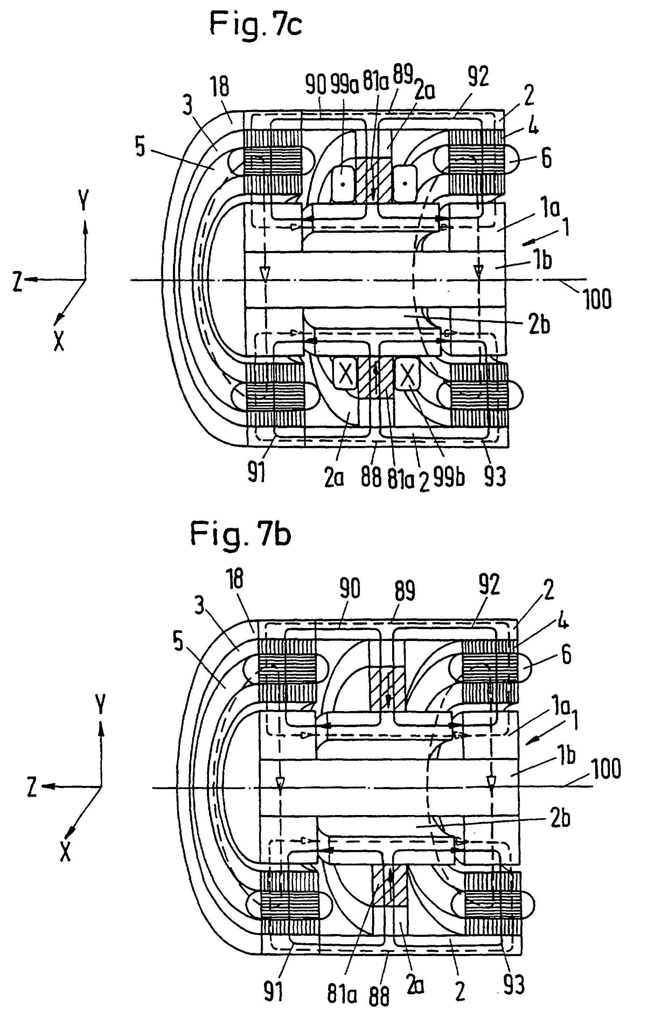

Figur 7 zeigt eine Anordnung zur aktiven magnetischen Lagerung eines Rotors 1 nach dem erfindungsgemässen Prinzip mit einer zusätzlichen aktiven axialen magnetischen Lagerung. Hierfür werden für die beiden Drehfeldmaschinenstatoren 3 und 4 zwei getrennte, einander entgegengerichtete Unipolarflusskreise, dargestellt durch die Unipolarflusslinien 90 und 91 beziehungsweise 92 und 93 aufgebaut. Die beiden Unipolarflüsse werden über zwei getrennt axial magnetisierte Permanentmagnetringe 80 und 81 mit entgegengesetzter Magnetisierungsrichtung erregt. Über die Flussleitelemente 84 und 85 im Stator 2 werden die beiden einander entgegengesetzten Unipolarflüsse 90,91 und 92,93 axial in eine mit dem Rotor 1 fest verbundene Axiallagerscheibe 86 geleitet und von dieser radial zum Rotor 1 geführt. Über den Rotor 1 schliessen sich die Unipolarflüsse weiter zu den Drehfeldmaschinenstatoren 3 und 4 und über allfällige Flussleitringe 82, 83 zu den Permanentmagnetringen 80,81. Erfindungsgemäss, wie vorgängig beschrieben, werden über die Drehfeldmaschinenstatoren 3 und 4 mit Hilfe der Drehstromwicklungen 5 und 6 radiale magnetische Lagerkräfte durch Überlagerung der Unipolarflüsse mit Radialsteuerflüssen 10, 11 erzeugt. Über eine zusätzliche Axialringspule 87, welche konzentrisch zum Rotor 1 verlaufend angeordnet ist, wird ein weiterer Steuerfluss, ein sogenannter Axialsteuerfluss, dargestellt durch die Flusslinien 88 und 89, erregt. Der Axialsteuerfluss schliesst sich über den Flussleitring 97, über die Flussleitelemente 84 und 85 und axial über die Axiallagerscheibe 86. Die beiden Unipolarflüsse 90,92 treten auf beiden Seiten senkrecht in die Axiallagerscheibe 86 ein. Der Axialsteuerfluss tritt auf der linken Seite senkrecht in die Axiallagerscheibe 86 ein und auf der rechten Seite wieder senkrecht aus der Axiallagerscheibe 86 aus. Auf der linken Seite der Axiallagerscheibe 76 verstärkt somit der Axialsteuerfluss, dargestellt durch die Flusslinien 88 und 89, den Unipolarfluss, dargestellt durch die Unipolarflusslinien 90 und 91. Auf der rechten Seite schwächt der Axialsteuerfluss, dargestellt durch die Flusslinien 88 und 89, den Unipolarfluss, dargestellt durch die Unipolarflusslinien 92 und 93. Auf die Axiallagerscheibe 86 wirkt eine axial gerichtete magnetische Zugkraft in Richtung der höheren Flussdichte, das heisst in Figur 7 nach links. Sie lässt sich über den Strom in der Axialringspule 87 bezüglich Betrag und Vorzeichen steuern. Durch eine übergeordnete Positionsregelung wird eine aktive axiale magnetische Lagerung des Rotors 1 möglich.

Fig. 7b zeigt in einer Schnittzeichnung eine weitere Anordnung zur aktiven magnetischen Lagerung eines Rotors 1 mit einer zusätzlichen aktiven axialen magnetischen Lagerung. Zwei in axialer Richtung beabstandete Drehfeldmaschinenstatoren 3,4 sind über ein ferromagnetisches Gehäuse 18 miteinander verbunden und bilden einen Stator 2. Zwischen den Drehfeldmaschinenstatoren 3,4 ist ein in radialer Richtung magnetisierter Permanentmagnet 81a angeordnet, welcher über ein ringformiges, ferromagnetisches Flussleitteil 2a mit dem Gehäuse 18 verbunden ist. Weiter ist der Permanentmagnet 81a gegen den Rotor 1 hin mit einem zylinderförmigen, in axialer Richtung verlaufenden ferromagnetischen Flussleitteil 2b verbunden. Das Flussleitteil 2b kann auch aus geblechtem Material gefertigt sein. Der Rotor 1 besteht aus einer nicht ferromagnetischen Welle 1b, mit welcher beidseitig ein ferromagnetisches, zylinderförmiges Teil 1a fest verbunden ist. Der Permanentmagnet 81a erzeugt zwei getrennte Unipolarflusskreise, dargestellt durch die vier Unipolarflusslinien 90,91,92,93, wobei ein Flusskreis jeweils ausgehend vom Permanentmagnet 81a in axialer Richtung über das zylinderförmige Flussleitteil 2b und einem Luftspalt zum Rotorteil 1a verläuft, danach in radialer Richtung über den Luftspalt in den Drehfeldmaschinenstator 3,4 verläuft, und weiter über das Gehäuse 18 und das Flussleitteil 2a zurück zum Permanentmagnet 18a. Der Steuerfluss 88,89 wird von einem Gleichstromanteil in den Spulen der Drehfeldmaschinenstatoren 3,4 bewirkt, wobei sich im dargestellten Ausführungsbeispiel durch die Überlagerung des Steuerflusses 88,89 mit dem Unipolarfluss 90,91,92,93 zwischen Drehfeldmaschinenstator 3 und Flussleitteil 2b eine Abschwächung und zwischen dem Drehfeldmaschinenstator 4 und dem Flussleitteil 2b eine Verstärkung des axial ausgerichteten Magnetfeldes ergibt, was eine in axialer Richtung nach rechts wirkende Kraft auf den Rotor 1 erzeugt. Somit ist die Lage des Rotors 1 axial in beiden Richtungen mit einer entsprechend ausgebildeten Ansteuervorrichtung mit Sensor beliebig ansteuerbar. Beim Ausführungsbeispiel gemäss Fig. 7b sind alle fünf Freiheitsgrade des Rotors 1 ansteuerbar, nämlich die x- und y-Richtung bei jedem Drehfeldmaschienenstator 3,4, sowie die z-Richtung des Rotors 1.

Das Ausführungsbeispiel gemäss Fig. 7c unterscheidet sich vom Beispiel gemäss Fig. 7b insofern, als der Steuerfluss 88,89 nicht durch die Spulen der Drehfeldmaschinenstatoren 3,4 bewirkt wird, sondern durch eine das zylinderförmige Flussleitteil 2b umgebende Axialspule 99a, 99b. Durch diese Axialspule 99a,99b wird der im Flussleitteil 2b in axialer Richtung verlaufende Steuerfluss 88,89 erzeugt. Dadurch können die Spulen der Drehfeldmaschinenstatoren 3,4, ohne einen überlagerten Gleichstromanteil betrieben werden, sodass diese Spulen mit einem dreiphasigen Drehstromsteller ansteuerbar sind. Die Lage des Rotors 1 in axialer Richtung ist über die Axialspulen 99a,99b ansteuerbar.

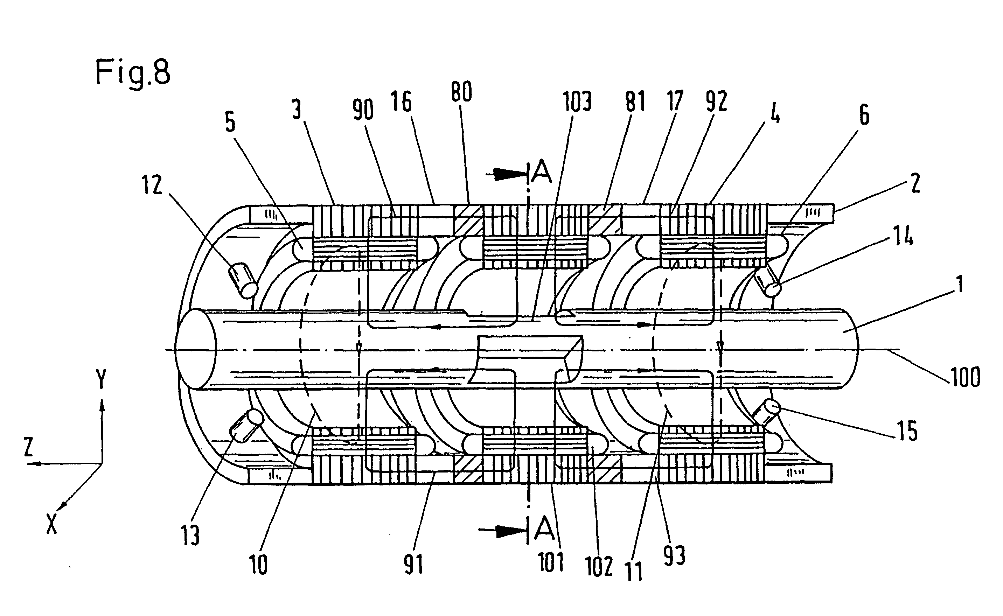

Figur 8 zeigt die erfindungsgemässe magnetische Lagervorrichtung in Kombination mit einem durch den Unipolarfluss magnetisch vorgespannten, geschalteten Reluktanzmotor (in Englisch bezeichnet als "permanent magnet biased switched reluctance motor"), wobei dieser Motor auch als ein synchroner Reluktanzmotor oder ein Schrittmotor betrachtet werden kann. Hierfür werden ebenfalls für die beiden Drehfeldmaschinenstatoren 3 und 4 zwei getrennte, einander entgegengerichtete Unipolarflusskreise, dargestellt durch die Unipolarflusslinien 90 und 91 beziehungsweise 92 und 93 aufgebaut. Im Unterschied zu Figur 7 werden die beiden Unipolarflusskreise über einen zwischen den beiden Drehfeldmaschinenstatoren 3 und 4 und den axial magnetisierten Permanentmagnetringen 80 und 81 angeordneten Reluktanzmotorstator 101 in radialer Richtung verlaufend zum Rotorbereich des Reluktanzmotors 103 geführt. Durch den Unipolarfluss wird der Reluktanzmotor magnetisch vorgespannt. Erfindungsgemäss, wie vorgängig beschrieben, werden über die Drehfeldmaschinenstatoren 3 und 4 mit Hilfe der Drehstromwicklungen 5 und 6 radiale magnetische Lagerkräfte durch Überlagerung der Unipolarflüsse mit Radialsteuerflüssen 10, 11 erzeugt.

Fig. 8a zeigt einen Querschnitt entlang der Linie A-A durch einen Reluktanzmotor gemäss Fig. 8 mit 4-poligem Rotor. Im Stator 101 sind senkrecht zur Betrachtungsebene verlaufende Leiter 102 a angeordnet, welche zusammen die Wicklung 102 des Reluktanzmotors bilden. Der Rotorbereich 103 des Reluktanzmotors weist den dargestellten Querschnitt auf. Es sind natürlich auch Reluktanzmotoren mit anderer Polzahl und Ausführungsform, z.B. Schrittmotoren anwendbar.

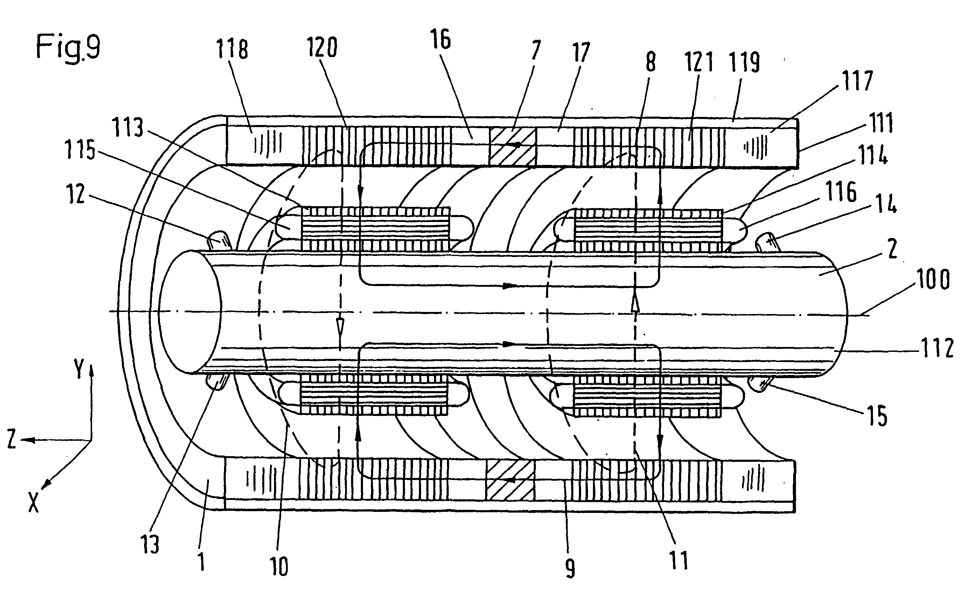

Natürlich ist es für alle besagten Ausführungsformen auch möglich die Mittel zur Erzeugung des Unipolarflusses, insbesondere Permanentmagnete im Rotor selbst anzuordnen. Weiter ist es auch möglich, die erfindungsgemässe Lagerung mit Drehfeldmotor-Innenstatoren und Aussenrotoren auszuführen. Figur 9 zeigt eine solche Ausführungsform der erfindungsgemässen magnetischen Lagervorrichtung mit einem Aussenrotor 111 und einem Innenstator 112. Der Unipolarfluss, dargestellt durch die beiden Unipolarflusslinien 8 und 9, wird hier durch einen axial magnetisierten Permanentmagnetring 7, welcher im Rotor 1 angebracht wird, erregt. Über Flussleitringe 16, 17 und über Rotorblechpakete 120, 121 wird er vom Rotor 1 zu den Drehfeldmaschinenstatoren 2 in Innenstatorausführung 113, 114 geführt und schliesst sich im Innenstator 112 aus ferromagnetischem Material. Die beiden Steuerflüsse, dargestellt durch die beiden Steuerflusslinien 10 und 11, können durch die Drehstromwicklungen 115 und 116 in Betrag und Richtung gesteuert werden. Die magnetische Lagerkraftbildung erfolgt dann wie bereits beschrieben.

Werden mehrere Lagersysteme nach Figur 9 kombiniert und in eine Hohlwelle eingebaut, so lässt sich die Durchbiegung der Hohlwelle über die verschiedenen Lagerstellen beeinflussen.

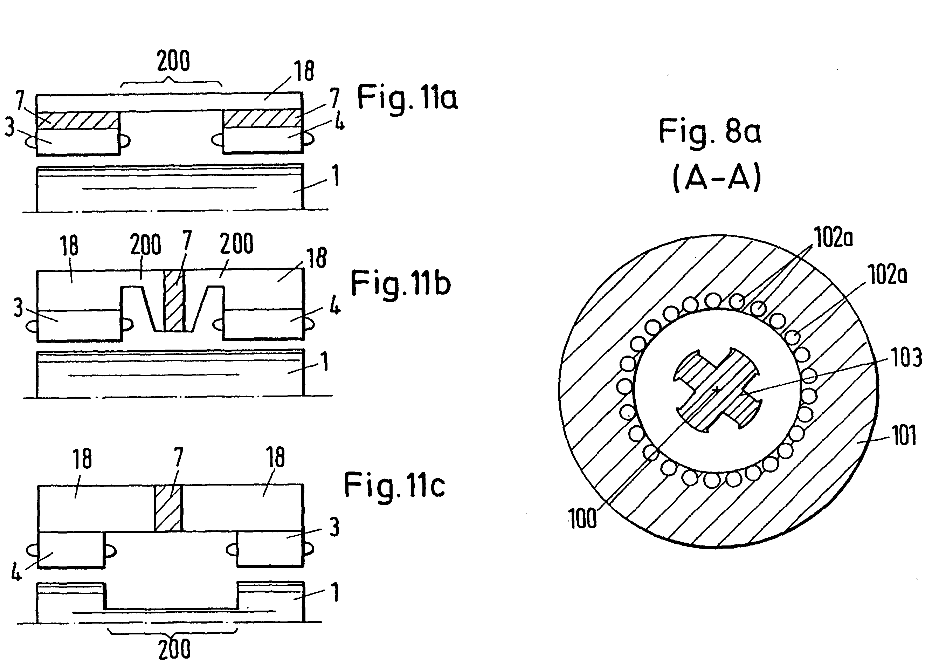

Die Figuren 11a,11b,11c zeigen jeweils einen Längsschnitt durch eine magnetische Lagervorrichtung mit eingebauten Sättigungsstellen 200, um den magnetischen Fluss eines Unipolarkreises zu begrenzen. Solche Stellen 200 können vorteilhaft sein, wenn die Lagervorrichtung Permanentmagnete 7 aufweist. Wenn zum Beispiel der Rotor 1 sich direkt mit dem Drehfeldmaschinenstator 3,4 berührt, so fliesst der gesamte Unipolarfluss über diese Berührungsstelle, was einen sehr hohen magnetischen Fluss mit entsprechend hohen magentischen Haltekräfte zur Folge hat. Die Sättigungsstellen 200 sind im Unipolarkreis angeordnet um den magnetischen Fluss im Unipolarflusskreis zu begrenzen. Solche Sättigungsstellen sind derart in der magnetischen Lagervorrichtung angeordnet, dass keine Sättigungsstelle 200 in den Steuerflusskreis zu liegen kommt, sondern dass die Sättigungsstellen 200 ausschliesslich in Teilen liegen, die nur vom Unipolarflusskreis durchflossen sind, um derart ausschliesslich den magnetischen Fluss des Unipolarflusskreises zu begrenzen. Im Ausführungsbeispiel gemäss Fig. 11a sind die Drehfeldmaschinenstatoren 3,4 über ein Permanentmagnet 7 mit dem Gehäuse 18 verbunden, wobei die Wandstärke des Gehäuses derart ausgelegt ist, dass sich zwischen den Drehfeldmaschinenstatoren 3,4 eine Sättigungsstelle 200 ergibt. Im Ausführungsbeispiel gemäss Fig. 11b besteht das Gehäuse 18 aus zwei Teilen mit in axialer Richtung in der Mitte angeordnetem, in axialer Richtung polarisiertem Permanentmagnet, wobei das Gehäuse 18 zwei verengte Stellen 200 aufweist, welche jeweils eine Sättigungsstelle 200 ausbilden. Im Ausführungsbeispiel gemäss Fig. 11c weist der in axialer Richtung verlaufende Rotor 1 einen Bereich 200 mit reduziertem Querschnitt auf, welcher eine Sättigungsstelle 200 ausbildet. Diese dargestellten Ausführungsbeispiele sind nur eine Möglichkeit aus einer Vielzahl von Möglichkeiten eine Sättigungsstelle in einer magnetischen Lagervorrichtung derart anzuordnen, dass ausschliesslich der magnetische Fluss des Unipolarflusskreises begrenzt wird.

**Patentansprüche**

1. Magnetische Maxwell-Lagervorrichtung für einen magnetisierbaren Körper (1), insbesondere eine rotierbare Welle (1), mit einem Maschinenstator (3,4) als Stator (2), in welchem Wicklungen zur Erzeugung eines Steuerflusses angeordnet sind, sowie mit einem ersten Mittel (99,7), welches in dem Maschinenstator (3,4) einen Unipolarfluss erzeugt, **dadurch gekennzeichnet, dass** der Maschinenstator als Drehfeldmaschinenstator ausgebildet ist und die Wicklungen zur Erzeugung des Steuerflusses als zweipolige, mindestens zweiphasige Drehfeldwicklungen (5,6) ausgeführt sind.

2. Magnetische Lagervorrichtung nach Anspruch 1, **dadurch gekennzeichnet, dass** mindestens zwei Drehfeldmaschinenstatoren (3,4) mit je einer zweipoligen, mindestens zweiphasigen Drehfeldwicklung (5,6)vorgesehen sind.

3. Magnetische Lagervorrichtung nach Anspruch 1 oder 2, **dadurch gekennzeichnet, dass** die Drehfeldwicklungen (5,6) als zweipolige, dreiphasige Drehfeldwicklungen ausgeführt sind.

4. Magnetische Lagervorrichtung nach Anspruch 3, **gekennzeichnet durch** einen dreiphasigen Drehstromsteller (100) zur Ansteuerung der dreiphasigen Drehfeldwicklung (5,6).

5. Magnetische Lagervorrichtung nach einem der Ansprüche 2 bis 4, **gekennzeichnet durch** zweite Mittel (16,18), welche die Drehfeldmaschinenstatoren (3,4) miteinander magnetisch koppeln.

6. Magnetische Lagervorrichtung nach einem der Ansprüche 1 bis 5, **dadurch gekennzeichnet, dass** das erste Mittel durch mindestens eine Drehfeldwicklung (5,6) gebildet ist, indem der Drehfeldwicklung (5,6) ein Gleichstromanteil anlegbar ist.

7. Magnetische Lagervorrichtung nach einem der Ansprüche 1 bis 5, **dadurch gekennzeichnet, dass** das erste Mittel (7,99) durch eine Ringspule (99) oder durch einen Permanentmagnet (7) gebildet ist.

8. Magnetische Lagervorrichtung nach einem der Ansprüche 3 bis 7, **dadurch gekennzeichnet, dass** jeder der Drehfeldmaschinenstatoren (3,4) drei oder sechs Nuten und drei oder sechs Zähne (62,63,64,65,66,67) aufweist, und dass die dreiphasigen Drehfeldwicklungen (5,6) durch drei oder sechs diskrete Spulen (30,31,32,33,34,35) gebildet sind.

9. Magnetische Lagervorrichtung nach einem der Ansprüche 1 bis 8, **dadurch gekennzeichnet, dass** der bzw. die Drehfeldmaschinenstatoren (3,4) als sogenannte 3T-Statoren ausgebildet sind.

10. Magnetische Lagervorrichtung nach einem der Ansprüche 1 bis 9, **dadurch gekennzeichnet, dass** der im Bereich der Drehfeldmaschinenstatoren (3,4) liegende Teil des Rotors (1) einen grösseren Durchmesser aufweist als der übrige Teil des Rotors (1).

11. Magnetische Lagervorrichtung nach einem der Ansprüche 1 bis 10, **dadurch gekennzeichnet, dass** der Rotor (1) als ein Innenläufer oder als ein Aussenläufer, d.h. aussenliegend um den Stator (2) angeordnet, ausgestaltet ist.

12. Magnetische Lagervorrichtung nach einem der Ansprüche 1 bis 11, **dadurch gekennzeichnet, dass** im Flusskreis des Unipolarflusses eine Sättigungsstelle (200) angeordnet ist.

13. Magnetische Lagervorrichtung nach einem der Ansprüche 1 bis 12, **dadurch gekennzeichnet, dass** in mindestens einem der Drehfeldmaschinenstatoren (3,4) eine zusätzliche Drehstromwicklung mit der Polpaarzahl grösser oder gleich drei angeordnet ist.

14. Magnetische Lagervorrichtung nach einem der Ansprüche 1 bis 12, **dadurch gekennzeichnet, dass** zusätzlich eine Antriebsvorrichtung angeordnet ist, welche einen Antrieb des Rotors (1) nach dem Prinzip eines Unipolarmotors erlaubt.

15. Magnetische Lagervorrichtung nach einem der Ansprüche 2 bis 14, **dadurch gekennzeichnet, dass** zwei Drehfeldmaschinenstatoren (3,4) eine magnetische Radiallagereinheit bilden, wobei die entsprechenden Phasen der zweipoligen Drehfeldwicklungen (5,6) mit entgegengesetztem Wicklungssinn elektrisch parallel oder in Serie geschaltet sind.

16. Magnetische Lagervorrichtung nach einem der Ansprüche 2 bis 15, **gekennzeichnet durch** mindesten einen im Stator (2) zwischen den beiden Drehfeldmaschinenstatoren (3,4) angeordneten Positionssensor (12,13,14,15), um die Lage des Rotors (1) zu erfassen.

17. Magnetische Lagervorrichtung nach einem der Ansprüche 2 bis 16, **dadurch gekennzeichnet, dass** eine mit dem Rotor (1) fest verbundene Axiallagerscheibe (86) aus ferromagnetischem Material zwischen den Drehfeldmaschinenstatoren (3,4) verlaufend angeordnet ist, um für die beiden Drehfeldmaschinenstatoren (3,4) zwei getrennte, einander entgegengerichtete Unipolarflusskreise zu ermöglichen, wobei die beiden Unipolarflüsse im Rotor (1) in entgegengesetzter Richtung verlaufen, und dass eine konzentrisch zum Rotor (1) verlaufende Ringspule (87) im Stator (2) angeordnet ist, um einen Axialsteuerfluss zu erzeugen, welcher sich in axialer Richtung über die besagte Axiallagerscheibe (86) schliesst.

18. Magnetische Lagervorrichtung nach einem der Ansprüche 2 bis 17, **dadurch gekennzeichnet, dass** für zwei Drehfeldmaschinenstatoren (3,4) zwei getrennte, einander entgegengerichtete Unipolarflusskreise vorhanden sind, welche Unipolarflusskreise einen gemeinsamen Unipol aufweisen, und dass der gemeinsame Unipol über einen Reluktanzmotor geführt ist, wobei der Reluktanzmotor durch die besagten Unipolarflüsse magnetisch vorgespannt ist.

19. Vorrichtung umfassend eine magnetische Lagervorrichtung nach einem der Ansprüche 1 bis 18.

**Claims**

1. Magnetic Maxwellian bearing apparatus for a magnetisable body (1), in particular a rotatable shaft (1), having a machine stator (3, 4) as stator (2) in which wingings are arranged for producing a control flux and also with a first means (99, 7) which produces a unipolar flux in the machine stator (3, 4) **characterised in** the machine stator is formed as a rotary field machine stator and the windings for producing the control flux are executed as two pole, at least two phase rotary field windings (5, 6).

2. Magnetic bearing apparatus in accordance with claim 1, **characterised in that** at least two rotary rotary field machine stators (3, 4), each having a two pole, at least two phase rotary field winding (5, 6), are provided.

3. Magnetic bearing apparatus in accordance with claim 1 or claim 2, **characterised in that** the rotary field windings (5, 6) are executed as two pole, three phase rotary field windings.

4. Magnetic bearing apparatus in accordance with claims 3, **characterised by** a three phase rotary current controller (100) for the control of the three phase rotary field winding (5, 6).

5. Magnetic bearing apparatus in accordance with one of the claims 2 to 4, **characterised by** second means (16, 18) which magnetically couple the rotary field machine stators (3, 4) to one another.

6. Magnetic bearing apparatus in accordance with one of the claims 1 to 5, **characterised in that** the first means is formed by at least one rotary field winding (5, 6) **in that** a d/c current component can be applied to the rotary field winding (5, 6).

7. Magnetic bearing apparatus in accordance with one of the claims 1 to 5, **characterised in that** the first means (7, 99) is formed by a ring coil (99) or by a permanent magnet (7).

8. Magnetic bearing apparatus in accordance with one of the claims 3 to 7, **characterised in that** each of the rotary field machine stators (3, 4) has three or six grooves and three or six teeth (62, 63, 64, 65, 66, 67); and **in that** the three phase rotary field windings (5, 6) are formed by three or six discrete coils (30, 31, 32, 33, 34, 35).

9. Magnetic bearing apparatus in accordance with one of the claims 1 to 8, **characterised in that** the rotary field machine stator or stators (3, 4) are formed as so-called 3T stators.

10. Magnetic bearing apparatus in accordance with one of the claims 1 to 9, **characterised in that** the part of the rotor (1) lying in the region of the rotary field machine stators (3, 4) has a diameter larger than the remaining part of the rotor (1).

11. Magnetic bearing apparatus in accordance with one of the claims 1 to 10, **characterised in that** the rotor (1) is designed as an inner rotor or as an outer rotor, i.e. arranged lying outwardly around the stator (2).

12. Magnetic bearing apparatus in accordance with one of the claims 1 to 11, **characterised in that** a saturation location (200) is arranged in the flux circuit of the unipolar flux.

13. Magnetic bearing apparatus in accordance with one of the claims 1 to 12, **characterised in that** an additional rotary current winding with a pole pair number greater than or equal to three is arranged in at least one of the rotary field machine stators (3, 4).

14. Magnetic bearing apparatus in accordance with one of the claims 1 to 12, **characterised in that** a drive device is additionally provided, which permits a driving of the rotor (1) in accordance with the principle of a unipolar motor.

15. Magnetic bearing apparatus in accordance with one of the claims 2 to 14, **characterised in that** two rotary field machine stators (3, 4) form a magnetic radial bearing unit, with the corresponding phases of the two pole rotary field windings (5, 6) being connected with an opposite winding sense electrically in parallel or in series.

16. Magnetic bearing apparatus in accordance with one of the claims 2 to 15, **characterised by** at least one position sensor (12, 13, 14, 15) arranged in the stator (2) between the two rotary field machine stators (3, 4) in order to detect the position of the rotor (1).

17. Magnetic bearing apparatus in accordance with one of the claims 2 to 16, **characterised in that** an axial bearing disc (86) of a ferromagnetic material fixedly connected to the rotor (1) is arranged to extend between the rotary field machine stators (3, 4) in order to enable two separate, mutually oppositely directed unipolar flux circuits for the two rotary field machine stators (3, 4), with the two unipolar fluxes extending in the opposite direction in the rotor (1); and **in that** a ring coil (87) extending concentrically to the rotor (1) is arranged in the stator (2) in order to produce an axial control flux which is closed in the axial direction via said axial bearing disc (86).

18. Magnetic bearing apparatus in accordance with one of the claims 2 to 17, **characterised in that** two separate, mutually oppositely directed unipolar flux circuits are present for two rotary field machine stators (3, 4), said unipolar flux circuits having a common unipole; and **in that** the common unipole is conducted via a reluctance motor, with the reluctance motor being magnetically biased by the said unipolar fluxes.

19. Apparatus including a magnetic bearing apparatus in accordance with one of the claims 1 to 18.

## Revendications

1. Dispositif de palier de Maxwell magnétique pour un corps (1) magnétisable, en particulier un arbre (1) rotatif, avec un stator de machine (3, 4) comme stator (2), dans lequel sont disposés des enroulements pour générer un flux de commande, et avec un premier moyen (99, 7), qui génère un flux unipolaire dans le stator de machine (3, 4), **caractérisé en ce que** le stator de machine est conçu comme un stator de machine à champ magnétique rotatif et les enroulements pour générer le flux de commande sont conçus comme des enroulements à champ magnétique rotatif (5, 6) bipolaires, au moins diphasés.

2. Dispositif de palier magnétique selon la revendication 1, **caractérisé en ce qu'**au moins deux stators de machine à champ magnétique rotatif (3, 4) sont prévus avec chacun un enroulement à champ magnétique rotatif (5,6) bipolaire, au moins diphasé.

3. Dispositif de palier magnétique selon la revendication 1 ou 2, **caractérisé en ce que** les enroulements à champ magnétique rotatif (5, 6) sont conçus comme des enroulements à champ magnétique rotatif bipolaires et triphasés.

4. Dispositif de palier magnétique selon la revendication 3, **caractérisé par** un régulateur à courant triphasé (100) pour l'amorçage de l'enroulement à champ magnétique rotatif (5, 6) triphasé.

5. Dispositif de palier magnétique selon l'une quelconque des revendications 2 à 4, **caractérisé par** des seconds moyens (16, 18) qui couplent entre eux de façon magnétique les stators de machine à champ magnétique rotatif (3, 4).

6. Dispositif de palier magnétique selon l'une quelconque des revendications 1 à 5, **caractérisé en ce que** le premier moyen est formé par au moins un enroulement à champ magnétique rotatif (5, 6) du fait qu'une partie de courant continu peut être appliquée sur l'enroulement à champ magnétique rotatif (5, 6).

7. Dispositif de palier magnétique selon l'une quelconque des revendications 1 à 5, **caractérisé en ce que** le premier moyen (7, 99) est formé par une bobine annulaire (99) ou par un aimant permanent (7).

8. Dispositif de palier magnétique selon l'une quelconque des revendications 3 à 7, **caractérisé en ce que** chacun des stators de machine à champ magnétique rotatif (3, 4) présente trois ou six rainures et trois ou six dents (62, 63, 64, 65, 66, 67) et **en ce que** les enroulements à champ magnétique rotatif (5, 6) triphasés sont formés par trois ou six bobines (30, 31, 32, 33, 34, 35) discrètes.

9. Dispositif de palier magnétique selon l'une quelconque des revendications 1 à 8, **caractérisé en ce que** le ou les stators de machine à champ rotatif (3, 4) sont conçus comme des "stators 3T".

10. Dispositif de palier magnétique selon l'une quelconque des revendications 1 à 9, **caractérisé en ce que** la partie, disposée dans la zone des stators de machine à champ magnétique rotatif (3, 4) du rotor (1) présente un diamètre supérieur à la partie restante du rotor (1).

11. Dispositif de palier magnétique selon l'une quelconque des revendications 1 à 10, **caractérisé en ce que** le rotor (1) est conçu comme un rotor interne ou comme un rotor externe, c'est-à-dire est disposé à l'extérieur autour du stator (2).

**12.** Dispositif de palier magnétique selon l'une quelconque des revendications 1 à 11, **caractérisé en ce qu'**un point de saturation (200) est disposé dans le circuit du flux unipolaire.

**13.** Dispositif de palier magnétique selon l'une quelconque des revendications 1 à 12, **caractérisé en ce qu'**un enroulement triphasé supplémentaire est disposé dans au moins l'un des stators de machine à champ magnétique rotatif (3, 4) avec le nombre de paires de pôles supérieur ou égal à trois.

**14.** Dispositif de palier magnétique selon l'une quelconque des revendications 1 à 12, **caractérisé en ce qu'**un dispositif d'entraînement, qui permet un entraînement du rotor (1) selon le principe d'un moteur unipolaire, est disposé en supplément.

**15.** Dispositif de palier magnétique selon l'une quelconque des revendications 2 à 14, **caractérisé en ce que** deux stators de machine à champ magnétique rotatif (3, 4) forment une unité magnétique à palier radial, les phases correspondantes des enroulements bipolaires à champ magnétique rotatif (5, 6) avec un sens de bobinage opposé sont branchées électriquement en parallèle ou en série.

**16.** Dispositif de palier magnétique selon l'une quelconque des revendications 2 à 15, **caractérisé par** au moins un capteur de position (12, 13, 14, 15) disposé dans le stator (2) entre les deux stators de machine à champ magnétique rotatif (3, 4) afin de détecter la position du rotor (1).

**17.** Dispositif de palier magnétique selon l'une quelconque des revendications 2 à 16, **caractérisé en ce qu'**un disque à palier axial (86) relié de façon fixe au rotor (1) à base de matériau ferromagnétique est disposé entre les stators de machine à champ magnétique rotatif (3, 4), afin de permettre deux circuits de flux unipolaire séparés et orientés dans le sens contraire pour les deux stators à champ magnétique rotatif (3, 4), les deux flux unipolaires étant agencés dans le rotor (1) dans le sens opposé, et **en ce qu'**une bobine annulaire (87) agencée de façon concentrique par rapport au rotor (1) est disposée dans le stator (2) pour générer un flux de commande axial qui se termine dans la direction axiale par ledit disque à palier axial (86).

**18.** Dispositif de palier magnétique selon l'une quelconque des revendications 2 à 17, **caractérisé en ce que** deux circuits de flux unipolaire séparés et orientés dans le sens contraire sont présents pour deux stators de machine à champ magnétique rotatif (3, 4), lesquels circuits de flux unipolaire présentent un pôle unique commun, et **en ce que** le pôle unique commun est guidé au moyen d'un moteur à réluctance, le moteur à réluctance étant prétendu par lesdits flux unipolaires.

**19.** Dispositif comprenant un dispositif de palier magnétique selon l'une quelconque des revendications 1 à 18.

Fig.1

EP 0 845 083 B1

## Fig.1a

## Fig. 1b

## Fig. 1c

Fig.2

EP 0 845 083 B1

Fig.3

Fig.4

# Fig.5

Fig. 5a

## Fig.5b

# Fig. 5c

## Fig.6

## Fig.6a

## Fig.6e

## Fig.6b

# Fig. 6c

Fig. 6d

Fig. 6f

Fig.7

# Fig. 7c

# Fig. 7b

Fig.8

EP 0 845 083 B1

33

Fig.9

Fig.10

Fig. 11a

Fig. 11b

Fig. 11c

Fig. 8a
(A-A)

EP 0 845 083 B1